# EUROPEAN PATENT APPLICATION

(11) **EP 4 622 309 A1**
(43) Date of publication of application: **24.09.2025**
(21) Application number: 24461545.6
(22) Date of filing: 18.03.2024
(51) Int. Cl.: H04W 4/70, A24F 40/00

(54) **AEROSOL PROVISION SYSTEM**

(71) Applicant: Nicoventures Trading Limited, London WC2R 3LA (GB)
(72) Inventor: JANCZAK, Hubert, 02-670 Warszawa (PL); BAKER, Darryl, London, WC2R 2PG (GB); SZELAGOWSKI, Wojciech, 02-670 Warszawa (PL); KERSEY, Rob, Hove, BN3 7GS (GB); YOUNOSSI, Najeeb, London, WC2R 3LA (GB)
(74) Representative: Dehns

(57) **Abstract**

An aerosol provision device comprising: a controller configured to control operation of the aerosol provision device; a control interface, the control interface comprising communication circuitry configured to send data to one or more further devices; and a memory for storing a collection of use data comprising a plurality of entries, the plurality of entries comprising entries of a first type of use data and entries of a second type of use data, wherein the controller is configured to: determine the occurrence of an event corresponding to a predetermined first event; responsive to determining the occurrence of an event corresponding to the predetermined first event, generate a first data report comprising one or more entries of the collection of use data, wherein the first data report is generated according to a first report scheme; cause the communication circuitry to send the first data report to a further device; determine the occurrence of an event corresponding to a predetermined second event; and responsive to determining the occurrence of an event corresponding to the predetermined second event, generate a second data report comprising one or more entries of the collection of use data, wherein the second data report is generated according to a second report scheme; and cause the communication circuitry to send the second data report to a further device.

## Description

### TECHNICAL FIELD

The present disclosure relates to an aerosol provision system, an aerosol provision device, and a method of generating vapour.

### BACKGROUND

The operation of delivery systems, such as aerosol provision systems, may be controlled by a controller. A delivery system may comprise an outer housing, a memory, a controller configured to control operation of the delivery system, a control interface for receiving inputs to the delivery system and providing outputs from the delivery system, and a power source configured to supply electrical power for operation of the delivery system. The delivery system may also comprise an aerosol generator, configured to generate aerosol from aerosol generating material, which may be in the form of a liquid, solid, or gel. The operation of the delivery system may be controlled by the controller comprised in the delivery system, or by a controller of a further device which communication circuitry of the control interface of the delivery system is configured to connect to and communicate data with. For example, the further device may send data comprising instructions to perform a control action to the communication circuitry of the delivery system. The operation of the delivery system may be controlled by a distributed system, comprising the delivery system and one or more further devices, such as an external power source device, and/or a computing device, which together control the operation of the delivery system.

### SUMMARY

According to an aspect there is provided an aerosol provision device comprising: a controller configured to control operation of the aerosol provision device; a control interface, the control interface comprising communication circuitry configured to send data to one or more further devices; and a memory for storing a collection of use data comprising a plurality of entries, the plurality of entries comprising entries of a first type of use data and entries of a second type of use data, wherein the controller is configured to: determine the occurrence of an event corresponding to a predetermined first event; responsive to determining the occurrence of an event corresponding to the predetermined first event, generate a first data report comprising one or more entries of the collection of use data, wherein the first data report is generated according to a first report scheme; cause the communication circuitry to send the first data report to a further device; determine the occurrence of an event corresponding to a predetermined second event; and responsive to determining the occurrence of an event corresponding to the predetermined second event, generate a second data report comprising one or more entries of the collection of use data, wherein the second data report is generated according to a second report scheme; and cause the communication circuitry to send the second data report to a further device.

In embodiments, i) the first report scheme specifies the one or more entries of use data to include in the first data report; and ii) the second report scheme specifies the one or more entries of use data to include in the second data report.

In embodiments, i) the first report scheme specifies one or more types of entries of use data to include in the first data report; and ii) the second report scheme specifies one or more types of entries of use data to include in the second data report.

In embodiments, i) the first report scheme specifies which entries of each of the one or more types to include in the first data report; and ii) the second report scheme specifies which entries of each of the one or more types to include in the second data report.

In embodiments, i) the first report scheme specifies that the one or more entries of use data to include in the first data report include a plurality of entries of use data; and ii) the second report scheme specifies that the one or more entries of use data to include in the second data report include a plurality of entries of use data.

In embodiments, i) the first report scheme specifies that the one or more entries of use data to include in the first data report include entries of a plurality of types of use data; and ii) the second report scheme specifies that the one or more entries of use data to include in the second data report include entries of a plurality of types of use data.

In embodiments, the first data report comprises: i) an indication that the first predetermined event occurred; and/or ii) a timestamp at which the first predetermined event occurred.

In embodiments, the second data report comprises: i) an indication that the second predetermined event occurred; and/or ii) a timestamp at which the second predetermined event occurred.

In embodiments, the first data report and/or second data report comprises: i) an indication of a type of the aerosol provision device; and/or ii) an identifier of the aerosol provision device.

In embodiments, the collection of use data comprises entries of a third type of use data, wherein each entry of the third type of use data denotes the occurrence of an error event of a particular type of one or more types of error event.

In embodiments, each entry of the third type of use data comprises a timestamp of the occurrence of the error event.

In embodiments, i) the first report scheme specifies that one or more entries of the third type of data are included in the first data report; and/or ii) the second report scheme specifies that one or more entries of the third type of data are included in the second data report.

In embodiments, i) the first report scheme specifies that one or more entries of the third type of data relating to one or more particular types of error event specified by the first report scheme are included in the first data report; and/or ii) the second report scheme specifies that one or more entries of the third type of data relating to one or more particular types of error event specified by the second report scheme are included in the second data report.

In embodiments, the controller is configured to: i) determine the occurrence of an event corresponding to the first predetermined event by determining that one or more predetermined criteria associated with the first predetermined event are met; and ii) determine the occurrence of an event corresponding to the second predetermined event by determining that one or more predetermined criteria associated with the second predetermined event are met.

In embodiments, the one or more predetermined criteria associated with the first predetermined event and/or the second predetermined event are stored in the memory.

In embodiments, i) the first data report comprises data indicating how the one or more predetermined criteria associated with the first predetermined event were met; and ii) the second data report comprises data indicating how the one or more predetermined criteria associated with the second predetermined event were met.

In embodiments, the predetermined first event and/or predetermined second event corresponds to an error event of a particular type of one or more types of error event.

In embodiments, the one or more types of error event comprise one or more malfunction error events relating to a malfunction.

In embodiments, the one or more malfunction error events comprise an aerosol generator error event relating to a malfunction of an aerosol generator.

In embodiments, the aerosol generator error event is an error event relating to a malfunction of a heating assembly.

In embodiments, the one or more malfunction error events comprise a power source error event relating to a malfunction of a power source of the aerosol provision device.

In embodiments, the power source error event relates to: i) a malfunction of the charging of the power source; or ii) a malfunction of the supply of power from the power source to other components of the aerosol provision device.

In embodiments, the one or more malfunction error events comprise a control interface error event relating to a malfunction of the control interface of the aerosol provision device.

In embodiments, the control interface error event relates to a malfunction of a communication module of communication circuitry of the control interface.

In embodiments, the one or malfunction error events comprise a controller error event relating to a malfunction of the controller.

In embodiments, the one or more malfunction error events comprise a memory error event relating to a malfunction of the memory.

In embodiments, the one or more predetermined events comprise one or more behavioural events relating to a pattern of use by a user, which behavioural events are determined to occur when one or more predetermined criteria relating to a pattern of use by a user is met.

In embodiments, the one or more behavioural events comprise a consumable discard event relating to the removal of a consumable comprising aerosol generating material before a threshold amount of aerosol has been generated from the aerosol generating material.

In embodiments, the predetermined first event and/or predetermined second event corresponds to the receipt by the control interface of an input comprising an instruction for the controller to perform a reset of the aerosol provision device.

In embodiments, i) the first report scheme specifies a priority at which the controller is to generate the first data report; and ii) the second report scheme specifies a priority at which the controller is to generate the second data report.

In embodiments, the controller is configured to, responsive to determining the occurrence of an event corresponding to the predetermined first event and the occurrence of an event corresponding to the predetermined second event, and when the first data report and second data report have not yet been generated: determine an order in which to generate the first data report and the second data report based on the priority specified by the first report scheme and the priority specified by the second report scheme.

In embodiments, the entries of the first type of use data and/or the second type of use data denote an occurrence of a use event or a property relating to the aerosol provision device.

In embodiments, the entries of the first type of use data and/or the second type of use data denote an occurrence of a use event or a property relating to a power source of the aerosol provision device.

In embodiments, the property relating to a power source of the aerosol provision device comprises: i) a charge level of a power source of the aerosol provision device; or ii) a charging status of the power source of the aerosol provision device.

In embodiments, the entries of the first type of use data and/or second type of use data denote an occurrence of a use event or a property relating to a connected status of the communication circuitry.

In embodiments, the controller is configured to control operation of the aerosol provision device at least in part by execution of software by the controller, and wherein the entries of the first type of use data and/or second type of use data denote an occurrence of a use event or a property relating to the software.

In embodiments, the entries of the first type of use data and/or second type of use data denote an occurrence of a use event or a property relating to use of the aerosol provision device with aerosol generating material.

In embodiments, the occurrence of a use event or the property relating to use of the aerosol provision device with aerosol generating material comprises:
i) a type of aerosol generate material provided to the aerosol provision device;
ii) a type of consumable comprising aerosol generating material provided to the aerosol provision device;
iii) a heating profile according to which the controller causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

In embodiments, the controller is configured to generate entries of the first type of use data, and store the generated entries of the first type of use data in the memory, responsive to the occurrence of triggers comprising: i) the passing of predetermined times; and/or ii) use events which are denoted by the entries of the first type of use data.

In embodiments, the controller is configured to generate entries of the second type of use data, and store the generated entries of the second type of use data in the memory, responsive to the occurrence of triggers comprising: i) the passing of predetermined times; and/or ii) use events which are denoted by the entries of the second type of use data.

In embodiments, i) causing the communication circuitry to send the first data report to the further device comprises causing the communication circuitry to send one or more packets comprising the first data report to a further device; and ii) causing the communication circuitry to send the second data report to the further device comprises causing the communication circuitry to send one or more packets comprising the second data report to a further device.

In embodiments, i) each packet of the one or more packets comprising the first data report comprises a payload and control information relating to the sending of the packet, the payloads of the one or more packets together comprising the first data report; and ii) each packet of the one or more packets comprising the second data report comprises a payload and control information relating to the sending of the packet, the payloads of the one or more packets together comprising the second data report.

In embodiments, the control information of each packet is in the form of header data and/or footer data.

In embodiments, the control information of each packet comprises sequencing information relating the order of each packet within a sequence of one or more packets.

In embodiments, the control information of each packet comprises error correction code relating to the payload of the packet.

In embodiments, the control information of each packet comprises an identifier of the further device.

In embodiments, at least part of the data of each packet of the one or more packets is encrypted.

In embodiments, at least part of the data of each packet of the one or more packets is encrypted using a first cryptographic key of the aerosol provision device.

According to an aspect there is provided aerosol provision system, comprising: the aerosol provision device of any of the above; and a consumable comprising aerosol generating material.

According to an aspect there is provided a system comprising: the aerosol provision device of any of the above or the aerosol provision system above; and a further device, wherein the communication circuitry of the aerosol provision device is configured to send data to the further device.

According to an aspect there is provided a method for an aerosol provision device, comprising: providing an aerosol provision device and a controller configured to control operation of the aerosol provision device; determining, by the controller, the occurrence of an event corresponding to a predetermined first event; responsive to determining the occurrence of an event corresponding to the predetermined first event, generating, by the controller, a first data report comprising one or more entries of a collection of use data in memory of the aerosol provision device, wherein the first data report is generated according to a first report scheme; causing, by the controller, communication circuitry to send the first data report to a further device; determining, by the controller, the occurrence of an event corresponding to a predetermined second event; and responsive to determining the occurrence of an event corresponding to the predetermined second event, generating, by the controller, a second data report comprising one or more entries of the collection of use data, wherein the second data report is generated according to a second report scheme; and causing the communication circuitry to send the second data report to a further device.

In embodiments, i) the first report scheme specifies the one or more entries of use data to include in the first data report; and ii) the second report scheme specifies the one or more entries of use data to include in the second data report.

In embodiments, i) the first report scheme specifies one or more types of entries of use data to include in the first data report; and ii) the second report scheme specifies one or more types of entries of use data to include in the second data report.

In embodiments, i) the first report scheme specifies which entries of each of the one or more types to include in the first data report; and ii) the second report scheme specifies which entries of each of the one or more types to include in the second data report.

In embodiments, i) the first report scheme specifies that the one or more entries of use data to include in the first data report include a plurality of entries of use data; and ii) the second report scheme specifies that the one or more entries of use data to include in the second data report include a plurality of entries of use data.

In embodiments, i) the first report scheme specifies that the one or more entries of use data to include in the first data report include entries of a plurality of types of use data; and ii) the second report scheme specifies that the one or more entries of use data to include in the second data report include entries of a plurality of types of use data.

In embodiments, the first data report comprises: i) an indication that the first predetermined event occurred; and/or ii) a timestamp at which the first predetermined event occurred.

In embodiments, the second data report comprises: i) an indication that the second predetermined event occurred; and/or ii) a timestamp at which the second predetermined event occurred.

In embodiments, the first data report and/or second data report comprises: i) an indication of a type of the aerosol provision device; and/or ii) an identifier of the aerosol provision device.

In embodiments, the collection of use data comprises entries of a third type of use data, wherein each entry of the third type of use data denotes the occurrence of an error event of a particular type of one or more types of error event.

In embodiments, each entry of the third type of use data comprises a timestamp of the occurrence of the error event.

In embodiments, i) the first report scheme specifies that one or more entries of the third type of data are included in the first data report; and/or ii) the second report scheme specifies that one or more entries of the third type of data are included in the second data report.

In embodiments, i) the first report scheme specifies that one or more entries of the third type of data relating to one or more particular types of error event specified by the first report scheme are included in the first data report; and/or ii) the second report scheme specifies that one or more entries of the third type of data relating to one or more particular types of error event specified by the second report scheme are included in the second data report.

In embodiments, i) determining the occurrence of an event corresponding to the first predetermined event comprises determining that one or more predetermined criteria associated with the first predetermined event are met; and ii) determining the occurrence of an event corresponding to the second predetermined event comprises determining that one or more predetermined criteria associated with the second predetermined event are met.

In embodiments, the one or more predetermined criteria associated with the first predetermined event and/or the second predetermined event are stored in the memory.

In embodiments, i) the first data report comprises data indicating how the one or more predetermined criteria associated with the first predetermined event were met; and ii) the second data report comprises data indicating how the one or more predetermined criteria associated with the second predetermined event were met.

In embodiments, the predetermined first event and/or predetermined second event corresponds to an error event of a particular type of one or more types of error event.

In embodiments, the one or more types of error event comprise one or more malfunction error events relating to a malfunction.

In embodiments, the one or more malfunction error events comprise an aerosol generator error event relating to a malfunction of an aerosol generator.

In embodiments, the aerosol generator error event is an error event relating to a malfunction of a heating assembly.

In embodiments, the one or more malfunction error events comprise a power source error event relating to a malfunction of a power source of the aerosol provision device.

In embodiments, the power source error event relates to: i) a malfunction of the charging of the power source; or ii) a malfunction of the supply of power from the power source to other components of the aerosol provision device.

In embodiments, the one or more malfunction error events comprise a control interface error event relating to a malfunction of the control interface of the aerosol provision device.

In embodiments, the control interface error event relates to a malfunction of a communication module of communication circuitry of the control interface.

In embodiments, the one or malfunction error events comprise a controller error event relating to a malfunction of the controller.

In embodiments, the one or more malfunction error events comprise a memory error event relating to a malfunction of the memory.

In embodiments, the one or more predetermined events comprise one or more behavioural events relating to a pattern of use by a user, which behavioural events are determined to occur when one or more predetermined criteria relating to a pattern of use by a user is met.

In embodiments, the one or more behavioural events comprise a consumable discard event relating to the removal of a consumable comprising aerosol generating material before a threshold amount of aerosol has been generated from the aerosol generating material
In embodiments, the predetermined first event and/or predetermined second event corresponds to the receipt by the control interface of an input comprising an instruction for the controller to perform a reset of the aerosol provision device.

In embodiments, i) the first report scheme specifies a priority at which the controller is to generate the first data report; and ii) the second report scheme specifies a priority at which the controller is to generate the second data report.

In embodiments, the occurrence of an event corresponding to the predetermined first event and the occurrence of an event corresponding to the predetermined second event is determined by the controller, and when the first data report and second data report have not yet been generated, and the method comprises determining, by the controller, an order in which to generate the first data report and the second data report based on the priority specified by the first report scheme and the priority specified by the second report scheme.

In embodiments, the entries of the first type of use data and/or the second type of use data denote an occurrence of a use event or a property relating to the aerosol provision device.

In embodiments, the entries of the first type of use data and/or the second type of use data denote an occurrence of a use event or a property relating to a power source of the aerosol provision device.

In embodiments, the property relating to a power source of the aerosol provision device comprises: i) a charge level of a power source of the aerosol provision device; or ii) a charging status of the power source of the aerosol provision device.

In embodiments, the entries of the first type of use data and/or second type of use data denote an occurrence of a use event or a property relating to a connected status of the communication circuitry.

In embodiments, the entries of the first type of use data and/or second type of use data denote an occurrence of a use event or a property relating to software for execution by the controller.

In embodiments, the entries of the first type of use data and/or second type of use data denote an occurrence of a use event or a property relating to use of the aerosol provision device with aerosol generating material.

In embodiments, the occurrence of a use event or the property relating to use of the aerosol provision device with aerosol generating material comprises:
i) a type of aerosol generate material provided to the aerosol provision device;
ii) a type of consumable comprising aerosol generating material provided to the aerosol provision device;
iii) a heating profile according to which the controller causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

In embodiments, the method comprises generating, by the controller, entries of the first type of use data, and storing the generated entries of the first type of use data in the memory, responsive to the occurrence of triggers comprising: i) the passing of predetermined times; and/or ii) use events which are denoted by the entries of the first type of use data.

In embodiments, the method comprises generating, by the controller, entries of the second type of use data, and storing the generated entries of the second type of use data in the memory, responsive to the occurrence of triggers comprising: i) the passing of predetermined times; and/or ii) use events which are denoted by the entries of the second type of use data.

In embodiments, i) causing the communication circuitry to send the first data report to the further device comprises causing the communication circuitry to send one or more packets comprising the first data report to a further device; and ii) causing the communication circuitry to send the second data report to the further device comprises causing the communication circuitry to send one or more packets comprising the second data report to a further device.

In embodiments, i) each packet of the one or more packets comprising the first data report comprises a payload and control information relating to the sending of the packet, the payloads of the one or more packets together comprising the first data report; and ii) each packet of the one or more packets comprising the second data report comprises a payload and control information relating to the sending of the packet, the payloads of the one or more packets together comprising the second data report.

In embodiments, the control information of each packet is in the form of header data and/or footer data.

In embodiments, the control information of each packet comprises sequencing information relating the order of each packet within a sequence of one or more packets.

In embodiments, the control information of each packet comprises error correction code relating to the payload of the packet.

In embodiments, the control information of each packet comprises an identifier of the further device.

In embodiments, at least part of the data of each packet of the one or more packets is encrypted.

In embodiments, at least part of the data of each packet of the one or more packets is encrypted using a first cryptographic key of the aerosol provision device.

According to an aspect there is provided a controller configured to control operation of an aerosol provision device, wherein the controller is configured to: determine the occurrence of an event corresponding to a predetermined first event; responsive to determining the occurrence of an event corresponding to the predetermined first event, generate a first data report comprising one or more entries of a collection of use data comprising a plurality of entries of use data in memory of the aerosol provision device, wherein the first data report is generated according to a first report scheme; cause communication circuitry of the aerosol provision device, which is configured to send data to one or more further devices, to send the first data report to a further device; determine the occurrence of an event corresponding to a predetermined second event; and responsive to determining the occurrence of an event corresponding to the predetermined second event, generate a second data report comprising one or more entries of the collection of use data, wherein the second data report is generated according to a second report scheme; and cause the communication circuitry to send the second data report to a further device.

In embodiments, i) the first report scheme specifies the one or more entries of use data to include in the first data report; and ii) the second report scheme specifies the one or more entries of use data to include in the second data report.

In embodiments, i) the first report scheme specifies one or more types of entries of use data to include in the first data report; and ii) the second report scheme specifies one or more types of entries of use data to include in the second data report.

In embodiments, i) the first report scheme specifies which entries of each of the one or more types to include in the first data report; and ii) the second report scheme specifies which entries of each of the one or more types to include in the second data report.

In embodiments, i) the first report scheme specifies that the one or more entries of use data to include in the first data report include a plurality of entries of use data; and ii) the second report scheme specifies that the one or more entries of use data to include in the second data report include a plurality of entries of use data.

In embodiments, i) the first report scheme specifies that the one or more entries of use data to include in the first data report include entries of a plurality of types of use data; and ii) the second report scheme specifies that the one or more entries of use data to include in the second data report include entries of a plurality of types of use data.

In embodiments, the first data report comprises: i) an indication that the first predetermined event occurred; and/or ii) a timestamp at which the first predetermined event occurred.

In embodiments, the second data report comprises: i) an indication that the second predetermined event occurred; and/or ii) a timestamp at which the second predetermined event occurred.

In embodiments, the first data report and/or second data report comprises: i) an indication of a type of the aerosol provision device; and/or ii) an identifier of the aerosol provision device.

In embodiments, the collection of use data comprises entries of a third type of use data, wherein each entry of the third type of use data denotes the occurrence of an error event of a particular type of one or more types of error event.

In embodiments, each entry of the third type of use data comprises a timestamp of the occurrence of the error event.

In embodiments, i) the first report scheme specifies that one or more entries of the third type of data are included in the first data report; and/or ii) the second report scheme specifies that one or more entries of the third type of data are included in the second data report.

In embodiments, i) the first report scheme specifies that one or more entries of the third type of data relating to one or more particular types of error event specified by the first report scheme are included in the first data report; and/or ii) the second report scheme specifies that one or more entries of the third type of data relating to one or more particular types of error event specified by the second report scheme are included in the second data report.

In embodiments, the controller is configured to: i) determine the occurrence of an event corresponding to the first predetermined event by determining that one or more predetermined criteria associated with the first predetermined event are met; and ii) determine the occurrence of an event corresponding to the second predetermined event by determining that one or more predetermined criteria associated with the second predetermined event are met.

In embodiments, the one or more predetermined criteria associated with the first predetermined event and/or the second predetermined event are stored in the memory.

In embodiments, i) the first data report comprises data indicating how the one or more predetermined criteria associated with the first predetermined event were met; and ii) the second data report comprises data indicating how the one or more predetermined criteria associated with the second predetermined event were met.

In embodiments, the predetermined first event and/or predetermined second event corresponds to an error event of a particular type of one or more types of error event.

In embodiments, the one or more types of error event comprise one or more malfunction error events relating to a malfunction.

In embodiments, the one or more malfunction error events comprise an aerosol generator error event relating to a malfunction of an aerosol generator.

In embodiments, the aerosol generator error event is an error event relating to a malfunction of a heating assembly.

In embodiments, the one or more malfunction error events comprise a power source error event relating to a malfunction of a power source of the aerosol provision device.

In embodiments, the power source error event relates to: i) a malfunction of the charging of the power source; or ii) a malfunction of the supply of power from the power source to other components of the aerosol provision device.

In embodiments, the one or more malfunction error events comprise a control interface error event relating to a malfunction of the control interface of the aerosol provision device.

In embodiments, the control interface error event relates to a malfunction of a communication module of communication circuitry of the control interface.

In embodiments, the one or malfunction error events comprise a controller error event relating to a malfunction of the controller.

In embodiments, the one or more malfunction error events comprise a memory error event relating to a malfunction of the memory.

In embodiments, the one or more predetermined events comprise one or more behavioural events relating to a pattern of use by a user, which behavioural events are determined to occur when one or more predetermined criteria relating to a pattern of use by a user is met.

In embodiments, the one or more behavioural events comprise a consumable discard event relating to the removal of a consumable comprising aerosol generating material before a threshold amount of aerosol has been generated from the aerosol generating material

In embodiments, the predetermined first event and/or predetermined second event corresponds to the receipt by the control interface of an input comprising an instruction for the controller to perform a reset of the aerosol provision device.

In embodiments, i) the first report scheme specifies a priority at which the controller is to generate the first data report; and ii) the second report scheme specifies a priority at which the controller is to generate the second data report.

In embodiments, the controller is configured to, responsive to determining the occurrence of an event corresponding to the predetermined first event and the occurrence of an event corresponding to the predetermined second event, and when the first data report and second data report have not yet been generated: determine an order in which to generate the first data report and the second data report based on the priority specified by the first report scheme and the priority specified by the second report scheme.

In embodiments, the entries of the first type of use data and/or the second type of use data denote an occurrence of a use event or a property relating to the aerosol provision device.

In embodiments, the entries of the first type of use data and/or the second type of use data denote an occurrence of a use event or a property relating to a power source of the aerosol provision device.

In embodiments, the property relating to a power source of the aerosol provision device comprises: i) a charge level of a power source of the aerosol provision device; or ii) a charging status of the power source of the aerosol provision device.

In embodiments, the entries of the first type of use data and/or second type of use data denote an occurrence of a use event or a property relating to a connected status of the communication circuitry.

In embodiments, the controller is configured to control operation of the aerosol provision device at least in part by execution of software by the controller, and wherein the entries of the first type of use data and/or second type of use data denote an occurrence of a use event or a property relating to the software.

In embodiments, the entries of the first type of use data and/or second type of use data denote an occurrence of a use event or a property relating to use of the aerosol provision device with aerosol generating material.

In embodiments, the occurrence of a use event or the property relating to use of the aerosol provision device with aerosol generating material comprises:
i) a type of aerosol generate material provided to the aerosol provision device;
ii) a type of consumable comprising aerosol generating material provided to the aerosol provision device;
iii) a heating profile according to which the controller causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

In embodiments, the controller is configured to generate entries of the first type of use data, and store the generated entries of the first type of use data in the memory, responsive to the occurrence of triggers comprising: i) the passing of predetermined times; and/or ii) use events which are denoted by the entries of the first type of use data.

In embodiments, the controller is configured to generate entries of the second type of use data, and store the generated entries of the second type of use data in the memory, responsive to the occurrence of triggers comprising: i) the passing of predetermined times; and/or ii) use events which are denoted by the entries of the second type of use data.

In embodiments, i) causing the communication circuitry to send the first data report to the further device comprises causing the communication circuitry to send one or more packets comprising the first data report to a further device; and ii) causing the communication circuitry to send the second data report to the further device comprises causing the communication circuitry to send one or more packets comprising the second data report to a further device.

In embodiments, i) each packet of the one or more packets comprising the first data report comprises a payload and control information relating to the sending of the packet, the payloads of the one or more packets together comprising the first data report; and ii) each packet of the one or more packets comprising the second data report comprises a payload and control information relating to the sending of the packet, the payloads of the one or more packets together comprising the second data report.

In embodiments, the control information of each packet is in the form of header data and/or footer data.

In embodiments, the control information of each packet comprises sequencing information relating the order of each packet within a sequence of one or more packets.

In embodiments, the control information of each packet comprises error correction code relating to the payload of the packet.

In embodiments, the control information of each packet comprises an identifier of the further device.

In embodiments, at least part of the data of each packet of the one or more packets is encrypted.

In embodiments, at least part of the data of each packet of the one or more packets is encrypted using a first cryptographic key of the aerosol provision device.

According to another aspect, there is provided a system comprising an aerosol provision device, wherein the system comprises a set of one or more controllers configured to control operation of the aerosol provision device, wherein the set of one or more controllers is configured to: determine the occurrence of an event corresponding to a predetermined first event; responsive to determining the occurrence of an event corresponding to the predetermined first event, generate a first data report comprising one or more entries of a collection of use data comprising a plurality of entries of use data in memory of the aerosol provision device, wherein the first data report is generated according to a first report scheme; cause communication circuitry of the system, which is configured to send data to one or more further devices, to send the first data report to a further device; determine the occurrence of an event corresponding to a predetermined second event; and responsive to determining the occurrence of an event corresponding to the predetermined second event, generate a second data report comprising one or more entries of the collection of use data, wherein the second data report is generated according to a second report scheme; and cause the communication circuitry to send the second data report to a further device.

In embodiments, the set of one or more controllers comprises a controller of the aerosol provision device.

In embodiments, the set of one or more controllers comprises a controller of a further device which is configured to communicate data with the aerosol provision device.

In embodiments, i) the first report scheme specifies the one or more entries of use data to include in the first data report; and ii) the second report scheme specifies the one or more entries of use data to include in the second data report.

In embodiments, i) the first report scheme specifies one or more types of entries of use data to include in the first data report; and ii) the second report scheme specifies one or more types of entries of use data to include in the second data report.

In embodiments, i) the first report scheme specifies which entries of each of the one or more types to include in the first data report; and ii) the second report scheme specifies which entries of each of the one or more types to include in the second data report.

In embodiments, i) the first report scheme specifies that the one or more entries of use data to include in the first data report include a plurality of entries of use data; and ii) the second report scheme specifies that the one or more entries of use data to include in the second data report include a plurality of entries of use data.

In embodiments, i) the first report scheme specifies that the one or more entries of use data to include in the first data report include entries of a plurality of types of use data; and ii) the second report scheme specifies that the one or more entries of use data to include in the second data report include entries of a plurality of types of use data.

In embodiments, the first data report comprises: i) an indication that the first predetermined event occurred; and/or ii) a timestamp at which the first predetermined event occurred.

In embodiments, the second data report comprises: i) an indication that the second predetermined event occurred; and/or ii) a timestamp at which the second predetermined event occurred.

In embodiments, the first data report and/or second data report comprises: i) an indication of a type of the aerosol provision device; and/or ii) an identifier of the aerosol provision device.

In embodiments, the collection of use data comprises entries of a third type of use data, wherein each entry of the third type of use data denotes the occurrence of an error event of a particular type of one or more types of error event.

In embodiments, each entry of the third type of use data comprises a timestamp of the occurrence of the error event.

In embodiments, i) the first report scheme specifies that one or more entries of the third type of data are included in the first data report; and/or ii) the second report scheme specifies that one or more entries of the third type of data are included in the second data report.

In embodiments, i) the first report scheme specifies that one or more entries of the third type of data relating to one or more particular types of error event specified by the first report scheme are included in the first data report; and/or ii) the second report scheme specifies that one or more entries of the third type of data relating to one or more particular types of error event specified by the second report scheme are included in the second data report.

In embodiments, the set of one or more controllers is configured to: i) determine the occurrence of an event corresponding to the first predetermined event by determining that one or more predetermined criteria associated with the first predetermined event are met; and ii) determine the occurrence of an event corresponding to the second predetermined event by determining that one or more predetermined criteria associated with the second predetermined event are met.

In embodiments, the one or more predetermined criteria associated with the first predetermined event and/or the second predetermined event are stored in the memory.

In embodiments, i) the first data report comprises data indicating how the one or more predetermined criteria associated with the first predetermined event were met; and ii) the second data report comprises data indicating how the one or more predetermined criteria associated with the second predetermined event were met.

In embodiments, the predetermined first event and/or predetermined second event corresponds to an error event of a particular type of one or more types of error event.

In embodiments, the one or more types of error event comprise one or more malfunction error events relating to a malfunction.

In embodiments, the one or more malfunction error events comprise an aerosol generator error event relating to a malfunction of an aerosol generator.

In embodiments, the aerosol generator error event is an error event relating to a malfunction of a heating assembly.

In embodiments, the one or more malfunction error events comprise a power source error event relating to a malfunction of a power source of the aerosol provision device.

In embodiments, the power source error event relates to: i) a malfunction of the charging of the power source; or ii) a malfunction of the supply of power from the power source to other components of the aerosol provision device.

In embodiments, the one or more malfunction error events comprise a control interface error event relating to a malfunction of the control interface of the aerosol provision device.

In embodiments, the control interface error event relates to a malfunction of a communication module of communication circuitry of the control interface.

In embodiments, the one or malfunction error events comprise a controller error event relating to a malfunction of a controller of the set of one or more controllers.

In embodiments, the one or more malfunction error events comprise a memory error event relating to a malfunction of the memory.

In embodiments, the one or more predetermined events comprise one or more behavioural events relating to a pattern of use by a user, which behavioural events are determined to occur when one or more predetermined criteria relating to a pattern of use by a user is met.

In embodiments, the one or more behavioural events comprise a consumable discard event relating to the removal of a consumable comprising aerosol generating material before a threshold amount of aerosol has been generated from the aerosol generating material

In embodiments, the predetermined first event and/or predetermined second event corresponds to the receipt by the control interface of an input comprising an instruction for the set of one or more controllers to perform a reset of the aerosol provision device.

In embodiments, i) the first report scheme specifies a priority at which the set of one or more controllers is to generate the first data report; and ii) the second report scheme specifies a priority at which the set of one or more controllers is to generate the second data report.

In embodiments, the set of one or more controllers is configured to, responsive to determining the occurrence of an event corresponding to the predetermined first event and the occurrence of an event corresponding to the predetermined second event, and when the first data report and second data report have not yet been generated: determine an order in which to generate the first data report and the second data report based on the priority specified by the first report scheme and the priority specified by the second report scheme.

In embodiments, the entries of the first type of use data and/or the second type of use data denote an occurrence of a use event or a property relating to the aerosol provision device.

In embodiments, the entries of the first type of use data and/or the second type of use data denote an occurrence of a use event or a property relating to a power source of the aerosol provision device.

In embodiments, the property relating to a power source of the aerosol provision device comprises: i) a charge level of a power source of the aerosol provision device; or ii) a charging status of the power source of the aerosol provision device.

In embodiments, the entries of the first type of use data and/or second type of use data denote an occurrence of a use event or a property relating to a connected status of the communication circuitry.

In embodiments, the set of one or more controllers is configured to control operation of the aerosol provision device at least in part by execution of software by the set of one or more controllers, and wherein the entries of the first type of use data and/or second type of use data denote an occurrence of a use event or a property relating to the software.

In embodiments, the entries of the first type of use data and/or second type of use data denote an occurrence of a use event or a property relating to use of the aerosol provision device with aerosol generating material.

In embodiments, the occurrence of a use event or the property relating to use of the aerosol provision device with aerosol generating material comprises:
i) a type of aerosol generate material provided to the aerosol provision device;
ii) a type of consumable comprising aerosol generating material provided to the aerosol provision device;
iii) a heating profile according to which the set of one or more controllers causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

In embodiments, the set of one or more controllers is configured to generate entries of the first type of use data, and store the generated entries of the first type of use data in the memory, responsive to the occurrence of triggers comprising: i) the passing of predetermined times; and/or ii) use events which are denoted by the entries of the first type of use data.

In embodiments, the set of one or more controllers is configured to generate entries of the second type of use data, and store the generated entries of the second type of use data in the memory, responsive to the occurrence of triggers comprising: i) the passing of predetermined times; and/or ii) use events which are denoted by the entries of the second type of use data.

In embodiments, i) causing the communication circuitry to send the first data report to the further device comprises causing the communication circuitry to send one or more packets comprising the first data report to a further device; and ii) causing the communication circuitry to send the second data report to the further device comprises causing the communication circuitry to send one or more packets comprising the second data report to a further device.

In embodiments, i) each packet of the one or more packets comprising the first data report comprises a payload and control information relating to the sending of the packet, the payloads of the one or more packets together comprising the first data report; and ii) each packet of the one or more packets comprising the second data report comprises a payload and control information relating to the sending of the packet, the payloads of the one or more packets together comprising the second data report.

In embodiments, the control information of each packet is in the form of header data and/or footer data.

In embodiments, the control information of each packet comprises sequencing information relating the order of each packet within a sequence of one or more packets.

In embodiments, the control information of each packet comprises error correction code relating to the payload of the packet.

In embodiments, the control information of each packet comprises an identifier of the further device.

In embodiments, at least part of the data of each packet of the one or more packets is encrypted.

In embodiments, at least part of the data of each packet of the one or more packets is encrypted using a first cryptographic key of the aerosol provision device.

Any aspect may comprise any feature or functional step described with respect to another aspect.

### FIGURES

Aspects of the invention will now be described, by way of example only, with reference to accompanying drawings, in which:
Figure 1 shows a cross-sectional view through a schematic representation of an aerosol provision system in accordance with certain embodiments.
Figure 2 shows a cross-sectional view through a schematic representation of an aerosol provision system in accordance with certain embodiments.
Figure 3 shows a cross-sectional view through a schematic representation of an aerosol provision system in accordance with certain embodiments.
Figure 4 shows a schematic representation of system comprising an aerosol provision device, a consumable, an external power source device, local computing devices, and a remote computing device, in accordance with certain embodiments.
Figure 5 shows a flow chart representation of a method of manufacturing an aerosol provision system, in accordance with certain embodiments.

### DETAILED DESCRIPTION

Aspects and features of certain examples and embodiments are discussed or described herein. Some aspects and features of certain examples and embodiments may be implemented conventionally and these are not discussed/described in detail in the interests of brevity. It will thus be appreciated that aspects and features of apparatus and methods discussed herein which are not described in detail may be implemented in accordance with any conventional techniques for implementing such aspects and features.

The present application is generally directed to the field of "delivery systems", i.e. systems that deliver at least one substance to a user. Generally, the aim of delivering that substance to a user will be to satisfy a particular "consumer moment". To this end, the substance may comprise constituents which impart a physiological effect on the user, a sensorial effect on the user, or both. In this context, the substance will generally be present in an aerosol-generating material or another material that is not intended to be aerosolised. The material itself (whether for aerosolisation or not) will typically contain a range of constituents. These are generally broken down as active substances, flavours, aerosol-former materials and other functional materials like fillers. An active substance, when delivered to a user, may result in some form of psychological effect on the user.

The delivery systems take many forms. According to the present disclosure, a "combustible" aerosol provision system is one where a constituent aerosol-generating material of the aerosol provision system (or component thereof) is combusted or burned during use in order to facilitate delivery of at least one substance to a user.

Exemplary combustible aerosol provision systems include cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material). Exemplary non-combustible aerosol provision systems include heat-not-burn aerosol provision systems (such as Tobacco Heating Products (THPs) and Carbon-tipped Tobacco Heating Products (CTHPs)) in which a solid material is heated to generate aerosol without combusting the material, vapour aerosol provision systems (commonly known as "electronic cigarettes" or "e-cigarettes") in which liquid material is heated to generate aerosol, and hybrid aerosol provision systems that are similar to vapour aerosol provision systems except that the aerosol generated from the liquid material passes through a second material (such as tobacco) to pick up additional constituents before reaching the user. Exemplary aerosol-free delivery systems that deliver the at least one substance to a user orally, nasally, transdermally or in another way without forming an aerosol, including but not limited to, lozenges, gums, patches, articles comprising inhalable powders, and oral products such as oral tobacco which includes snus or moist snuff, wherein the at least one substance may or may not comprise nicotine.

While various techniques will be described herein with regard to non-combustible aerosol provision systems, these may readily be applied in the context of any of the aforementioned delivery systems, for example by implementation within a delivery system where feasible, or in a "smart" container for delivery systems, e.g. for storing delivery systems. The delivery system described herein can be implemented as a combustible aerosol provision system, a non-combustible aerosol provision system or an aerosol-free delivery system.

In particular, but not exclusively, the present disclosure relates to a non-combustible aerosol provision system. A "non-combustible" aerosol provision system is an aerosol provision system where a constituent aerosol generating material of the aerosol provision system (or component thereof) is not combusted or burned in order to facilitate delivery of at least one substance to a user. The delivery system may be a non-combustible aerosol provision system, such as a powered non-combustible aerosol provision system. The non-combustible aerosol provision system may be an electronic cigarette, also known as a vaping device or electronic nicotine delivery system (END), although it is noted that the presence of nicotine in the aerosol-generating material is not a requirement. The non-combustible aerosol provision system may be an aerosol generating material heating system, such as a heat-not-burn system. An example of such a system is a tobacco heating system. In particular, but not exclusively, the present disclosure relates to an electronic aerosol provision system, which may (or may not) be an electronic non-combustible aerosol provision system.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants. The aerosol-generating material may comprise one or more active substances and/or flavours, one or more aerosol-former materials, and optionally one or more other functional material. The aerosol-generating material may comprise a binder, such as a gelling agent, and an aerosol former. Optionally, a substance to be delivered and/or filler may also be present. Optionally, a solvent, such as water, is also present and one or more other components of the aerosol-generating material may or may not be soluble in the solvent. In some embodiments, the aerosol-generating material is substantially free from botanical material. In particular, in some embodiments, the aerosol-generating material is substantially tobacco free.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free. The aerosol-generating film may have a thickness of about 0.015 mm to about 1 mm. For example, the thickness may be in the range of about 0.05 mm, 0.1 mm or 0.15 mm to about 0.5 mm or 0.3 mm. The aerosol-generating film may be continuous. For example, the film may comprise or be a continuous sheet of material. The sheet may be in the form of a wrapper, it may be gathered to form a gathered sheet or it may be shredded to form a shredded sheet. The shredded sheet may comprise one or more strands or strips of aerosol-generating material. The aerosol-generating film may be discontinuous. For example, the aerosol-generating film may comprise one or more discrete portions or regions of aerosol-generating material, such as dots, stripes or lines, which may be supported on a support. In such embodiments, the support may be planar or non-planar. The aerosol-generating film may be formed by combining a binder, such as a gelling agent, with a solvent, such as water, an aerosol-former and one or more other components, such as one or more substances to be delivered, to form a slurry and then heating the slurry to volatilise at least some of the solvent to form the aerosol-generating film. The slurry may be heated to remove at least about 60 wt%, 70 wt%, 80 wt%, 85 wt% or 90 wt% of the solvent.

The aerosol-generating material may comprise or be an "amorphous solid". In some embodiments, the aerosol-generating materiel comprises an aerosol-generating film that is an amorphous solid. The amorphous solid may be a "monolithic solid". The amorphous solid may be substantially non-fibrous. In some embodiments, the amorphous solid may be a dried gel. The amorphous solid is a solid material that may retain some fluid, such as liquid, within it. In some embodiments, the amorphous solid may, for example, comprise from about 50wt%, 60wt% or 70wt% of amorphous solid, to about 90wt%, 95wt% or 100wt% of amorphous solid. The amorphous solid may be substantially free from botanical material. The amorphous solid may be substantially tobacco free.

The aerosol-former material may comprise one or more constituents capable of forming an aerosol. In some embodiments, the aerosol-former material may comprise one or more of glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate. The one or more other functional materials may comprise one or more of pH regulators, colouring agents, preservatives, binders, fillers, stabilizers, and/or antioxidants.

As is common in the technical field, the terms "vapour" and "aerosol", and related terms such as "vaporise", "volatilise" and "aerosolise", may generally be used interchangeably. In use, an inhalation on the aerosol provision system occurs when a user inhales aerosol generated from the aerosol generating material. A sequence of inhalations can be considered a "session". A sequence may correspond to a characteristic pattern of inhalations. A sequence may correspond to a predetermined number, or range, or inhalations on the aerosol provision system by the user. For example, a session may be defined as 10 inhalations, or between 8 to 12 inhalations. Additionally or alternatively, a session may be defined by a predetermined time from an initial inhalation on the aerosol provision system (for example, with aerosol generating material being heated to a target temperature for the predetermined time). For example the predetermined time may be under 4 four minutes, under 6 minutes, or under 10 minutes. Hence, a session can be defined when the total number inhalations reaches a predetermined number, or range, of inhalations and/or when the time elapsed from the initial inhalation reaches the predetermined time. It should be appreciate that the values for the predetermined number of inhalations and predetermined time have been given purely as an example, and other numbers and times may be used in other implementations as appropriate.

Additionally or alternatively, in an embodiment a session corresponds to a sequence of inhalations, the sequence separated from another session by a pause of more than a threshold duration. The threshold duration may be selected for ease of comprehension by the user (e.g. 5, 10, 15, 20, 25, 30, 35, 40, 45, 50 or 55 minutes, or more preferably a period in the range 5-45 minutes, or more preferably a period in the range 10-30 minutes, or still more preferably a period in the range 15-20 minutes), or it may be selected on a pharmokinetic basis, such as the so-called half-life of nicotine in the body (approximately 2 hours) or a physiological basis, such as a perceived drop in brain stimulation by the nicotine (for example in the order of 15-25 minutes, averaging around 18-20 minutes). Optionally this half- life may in turn be individualised, e.g. on the basis of sex, build (size, weight etc), ethnicity and the like. A look-up table of half-life values, and/or a scaling value for one or more physiological factors of the user may be used to refine an otherwise generic half-life value. Hence an inhalation session may comprise a characteristic pattern and/or may be separated from another session by a threshold duration of non-use.

Typically, the aerosol provision system may comprise an aerosol provision device (e.g. a reusable part) and a consumable for use with the aerosol provision device (e.g. a disposable part). In many cases, the consumable is sold separately from the device, and often in a multipack. The terms "consumable" and "article" may generally be used interchangeably. Often the consumable will comprise the aerosol generating material, and the aerosol provision device will comprise a power source, controller, control interface, and memory (each of which will be discussed in more detail herein) enclosed at least partly within an outer housing which may be formed from any suitable material, for example a plastics material or a metal. In use, the consumable may be engaged with the aerosol provision device. For example, at least part of the consumable may be received by the aerosol provision device, for example in a consumable chamber of the aerosol provision device which is configured to receive at least part of the consumable. The aerosol provision device is configured to generate aerosol from the aerosol generating material of the consumable. Once the aerosol generating material of consumable has been exhausted, the user can remove the consumable, e.g. by disengaging the aerosol provision device and the consumable, dispose of it, and replace it with a (new) consumable. Devices conforming to this type of two-piece modular configuration may generally be referred to as two-piece aerosol provision devices, which together with a consumable may generally be referred to as two-piece aerosol provision systems.

In such two-piece aerosol provision systems, the consumable and aerosol provision device are able to engage with one another. For example, the consumable may be mechanically and/or electrically coupled to the aerosol provision device, using an engagement interface of the aerosol provision device and a corresponding engagement interface of the consumable. The engagement interface of the aerosol provision device may comprise mechanical engagement means for mechanical coupling with the consumable, e.g. with corresponding mechanical engagement means of the consumable. The engagement interface may comprise an electrical engagement interface for electrically connecting with the consumable, e.g. with a corresponding electrical engagement interface of the consumable. The electrical engagement interface of the aerosol provision device may be configured to supply electrical power to the consumable, for example to an aerosol generator of the consumable (as will be discussed in more detail herein).

While a consumable commonly comprises a single portion of aerosol generating material, in some cases the consumable may comprise a plurality of portions of aerosol generating material, each of which may be different. In such cases, the consumable may be received by an aerosol provision device which is configured to generate aerosol from one or more of the plurality of portions of aerosol generating material. For example, the aerosol provision device may be configured to generate aerosol independently from each of the portions of aerosol generating material. Each portion of aerosol generating material may be a discrete portion, wherein the plurality of discrete potions are separate from one another such that each of the discrete portions may be energised (e.g. heated) individually, and/or may be energised (e.g. heated) independently, to generate an aerosol.

In some cases, the aerosol provision device may be configured to receive a plurality of consumables, which may each comprise different aerosol generating material respectively. In use, the plurality of consumables are received by the aerosol provision device, and the aerosol provision device is configured to generate aerosol from the aerosol generating material of one or more of the consumables, each of which aerosol may be generated from independently. Devices conforming to this type of configuration may generally be referred to as multi-consumable devices, which together with the plurality of consumables may generally be referred to as multi-consumable systems. Multi-consumable devices and systems such as these may use any of the features used in a two-piece aerosol provision devices and systems, such as, but not limited to the aerosol generating material, aerosol generator, power source, control interface, controller, and memory (as will be discussed in more detail herein). Likewise, these components may be enclosed at least partly within an outer housing which may be formed from any suitable material, for example a plastics material or a metal.

Embodiments are also envisaged in which the aerosol provision device is a one-piece aerosol provision device, which is not configured to receive a removable consumable, and instead the aerosol provision device itself comprises the aerosol generating material. The one-piece aerosol provision device may be configured to be refillable, such that when at least a portion of the (initial) aerosol generating material of the aerosol provision device is exhausted, it can be refilled with (new) aerosol generating material. Alternatively, the one-piece aerosol provision device may be a disposable one-piece aerosol provision device, which the user can dispose of once the aerosol generating material has been exhausted (for example, after a predetermined number of inhalations), and for example is not configured to be refillable by the user. Further, the one-piece aerosol provision device may be a non-rechargeable one-piece aerosol provision device, not comprising a charging interface (as will be discussed in more detail herein) for receiving power from an external power source. A one-piece aerosol provision device such as these (either refillable or disposable) may use any of the features used in two-piece (and/or multi-consumable) aerosol provision systems, such as, but not limited to, the aerosol generating material, aerosol generator, power source, control interface, controller, and memory (as will be discussed in more detail herein). Likewise, these components may be enclosed at least partly within an outer housing which may be formed from any suitable material, for example a plastics material or a metal.

The aerosol provision system comprises a mouthpiece, through which the user can draw aerosol that has been generated from the aerosol generating material. The mouthpiece may comprise a material that feels comfortable to the lips of the user, for example a plastic or rubber material. As a user inhales on the mouthpiece, air is drawn through the aerosol provision system, which combines with the aerosol generated from the aerosol generating material. The user can then inhale this combination of air and aerosol, such that substance of the aerosol can be delivered to the user. An aerosol provision system may comprise one or more air inlets, which can be located away from a mouthpiece of the system. When a user sucks on the mouthpiece, air is drawn in through the one or more air inlets, and past the location where the aerosol is generated. There may be a flow path connecting between this location and an opening in the mouthpiece, so that the air drawn in through the one or more air inlets continues along the flow path to the opening, carrying the aerosol with it. The aerosol then exits the aerosol provision system through the mouthpiece, e.g. the opening thereof, for inhalation by the user. The mouthpiece may be a part of the consumable, or a part of the aerosol provision device, or may be a separate component which forms a part of the aerosol provision system in addition to the aerosol provision device and the consumable.

The aerosol provision system (e.g. the aerosol provision device thereof) may be elongate, extending along a longitudinal axis. The aerosol provision system (e.g. the aerosol provision device thereof) has a proximal end, which will be closest to the user (e.g. the user's mouth) when in use by the user to inhale aerosol generated by the aerosol provision system, and a distal end which will be furthest from the user when in use, i.e. at an end opposing the proximal end.

The proximal end may also be referred to as the "mouth end". The aerosol provision system (e.g. the aerosol provision device thereof) accordingly defines a proximal direction, which is directed towards the user when in use, e.g. along the longitudinal axis from the distal end to the proximal end. Further, the aerosol provision system likewise defines a distal direction, which is directed away from the user when in use, e.g. along the longitudinal axis from the proximal end to the distal end. The terms 'proximal' and 'distal' as applied to features of the aerosol provision system (e.g. aerosol provision device) will be described by reference to the relative positioning of such features with respect to each other in a proximal or distal direction along the longitudinal axis.

The construction of the aerosol provision system (and aerosol provision device thereof) may change depending upon the form of the aerosol generating material which it is configured to generate aerosol from. However, while examples will be discussed below with regard to various different forms of aerosol generating material, and correspondingly different aerosol provision device constructions, the techniques discussed herein may be applied in all forms of the aerosol generating material.

The aerosol provision system (e.g. the aerosol provision device thereof) comprises an aerosol generator configured to generate aerosol from the aerosol generating material, the aerosol being generated at an aerosol generation area of the aerosol provision system. The aerosol generator often, but not always, comprises a heating assembly configured to heat the aerosol generating material and cause it to volatise, thereby generating aerosol which can be inhaled by the user. While many features will be discussed herein with regard to an aerosol generator which comprises a heating assembly, we note that these features may likewise be applied to an aerosol generator which does not necessarily comprise a heating assembly.

The aerosol provision system (e.g. the aerosol provision device thereof) often comprises a heating chamber, which the heating assembly is configured to heat, such that aerosol generating material in the heating chamber is heated. In such arrangements, the heating chamber may correspond to the aerosol generation area. The heating chamber is configured to receive aerosol generating material. The heating chamber may be comprised in the consumable. The aerosol provision system (e.g. the aerosol provision device thereof) may comprise a consumable chamber configured to receive at least part of the consumable. The heating chamber may correspond to the consumable chamber, however, such as in arrangements where the heating chamber is comprised in the consumable, the heating chamber may not necessarily correspond to the consumable chamber, but rather a region within the consumable which, when connected to the aerosol provision device in use, is received in the consumable chamber. The consumable may be configured to be partially or fully inserted into the aerosol provision device by inserting it into the consumable chamber through an opening in the outer housing of the aerosol provision device.

The heating assembly may comprise a heating element, and the heating assembly is configured to heat the heating element. The heating element is for heating the aerosol generating material, e.g. by being configured to heat the heating chamber. The heating element may be a part of the aerosol provision device, or a part of the consumable, or may be a separate component which is a part of the aerosol provision system in addition to the aerosol provision device and the consumable. A plurality of corresponding heating elements may be used, which the heating assembly may be configured to heat independently, e.g. such that they can heat individually or in combination. In the case of a system comprising a plurality of portions of aerosol generating material (regardless of the plurality of portions being in the same consumable, a plurality of consumables, or in the aerosol provision device), a plurality of corresponding heating elements may be used, each being configured to heat a corresponding portion of aerosol generating material. A plurality of heating elements may also be configured to heat different regions of the same portion of aerosol generating material.

In some arrangements the heating assembly is configured to cause the heating element to become heated by resistive heating, wherein a current is passed through the heating element in order to cause heating to occur as a result of the electrical resistance of the heating element. In some arrangements the heating assembly is configured to cause a heating element to become heated by inductive heating, in which case a magnetic field generator of the heating assembly is configured to generate a varying magnetic field that penetrates the heating element, and causes susceptor material within the heating element to become heated. In other words, the susceptor material is configured to be heated by penetration with a varying magnetic field. The magnetic field generator may comprise a coil, such as a helical coil, which may encircle at least part of the heating chamber.

The heating element may become heated by penetration with a varying magnetic field because the susceptor material comprises electrically conductive material, and the varying magnetic field causes the induction of eddy currents within the susceptor material that cause heating to occur. This may, in alternative or in addition, be because the susceptor material comprises magnetic material, and the varying magnetic field causes the heating of the susceptor material by the mechanism of magnetic hysteresis. In embodiments, the susceptor material may comprise material which is both electrically conductive and magnetic.

The heating element, e.g. the susceptor material thereof (when present), may comprise one or more materials selected from the group comprising a metallic material such as aluminium, gold, iron, nickel, cobalt, plain-carbon steel, stainless steel, ferritic stainless steel, copper, and bronze, or a non-metallic material such as conductive carbon or graphite.

Arrangements are contemplated in which the heating assembly comprises a radiation heating component configured to generate radiation for heating the aerosol generating material, e.g. for heating the heating chamber. The radiation may comprise electromagnetic radiation, such as infrared radiation or microwave radiation, or sonic radiation, such as ultrasonic radiation. In such arrangements, as with arrangements discussed above with regard to a heating element, the heating assembly may be configured to heat independently different portions of aerosol generating material, or different regions of the same portion of aerosol generating material. Generally, this may be enabled by the heating assembly being configured to heat independently different regions of the heating chamber.

Each of these heating techniques may be applied to any of the aerosol generating materials discussed above, and in the context of one-piece aerosol provision systems, two-piece aerosol provision systems, and multi-consumable aerosol provision systems, or any other form of delivery system which uses heating to generate aerosol from aerosol generating material.

In arrangements where the aerosol generating material is a liquid, the aerosol generating can be stored within a reservoir comprised in the aerosol provision system. The reservoir may a part of the aerosol provision device, particularly in the case that the aerosol provision device is a one-piece aerosol provision device, or may a part of the consumable (when present). In arrangements where the reservoir storing the aerosol generating material is a part of the consumable, the consumable may also comprise the heating element, which may be heated using resistive or inductive heating. In such arrangements where the consumable comprises a reservoir storing aerosol generating material, the consumable may be referred to as a cartridge.

The reservoir may have the form of a storage tank, being a container or receptacle in which aerosol generating material can be stored such that the liquid is free to move and flow within the confines of the tank. In arrangements in which the reservoir is comprised in the consumable, the reservoir may be sealed after filling during manufacture so as to be disposable after the aerosol generating material is consumed, otherwise, it may have an inlet port through which new aerosol generating material can be added by the user. In such arrangements the heating element may be comprised in the consumable, and the heating element may be located externally of the reservoir tank for generating the aerosol by vaporisation of the aerosol generating material by heating. A transfer arrangement which may comprise a wick or other porous element may be provided to deliver aerosol generating material from the reservoir to the heating element. The transfer arrangement may have one or more parts located inside the reservoir, or otherwise be in fluid communication with the aerosol generating material in the reservoir, so as to be able to absorb aerosol generating material and transfer it, e.g. by wicking or capillary action, to other parts of the transfer arrangement that are adjacent or in contact with the heating element. This aerosol generating material is thereby heated and vaporised, to be replaced by new aerosol generating material from the reservoir for transfer to the heating element by the wick transfer arrangement. The transfer arrangement may be thought of as a conduit between the reservoir and the heating element that transfers aerosol generating material from the reservoir to the heating element. Although discussed in the context of a reservoir and heating element comprised in the consumable, these features may likewise be applied in an aerosol provision device, for example in the case the aerosol provision device is a one-piece aerosol provision device.

In arrangements where the aerosol generating material is a solid or a gel, the aerosol generating material can be provided in the consumable. The consumable may be in a rod format, which may also interchangeably be referred to as a "stick" format, and which may have a cylindrical shape. In some cases, the consumable further comprises a filter and/or a cooling element. In such cases, the consumable may comprise the mouthpiece. The consumable may comprise a wrapper, which at least partially surrounds other components of the consumable, including one or more of a filter, a cooling element, a mouthpiece and the aerosol generating material. In some cases, the wrapper may comprise a paper layer. In some cases, the wrapper may comprise a non-combustible layer (e.g. a layer which is resistant to combustion), such as a metallic foil. Suitably, the wrapper may comprise an aluminium foil layer. The wrapper may comprise a laminate structure, and in some cases, the laminate structure may comprise a least one paper layer and at least one non-combustible layer.

The consumable may be provided in a differently shaped format such as a planar format, in which case the consumable comprises a sheet. The aerosol generating material can be present on or in a support, to form a substrate. The support may, for example, be or comprise paper, card, paperboard, cardboard, reconstituted material, a plastics material, a ceramic material, a composite material, glass, a metal, or a metal alloy.

When present, the heating element may be a part of the aerosol provision device, such that it comes into proximity (e.g. in contact) with the consumable when the consumable is received by the aerosol provision device. Alternatively, the heating element may be a part of the consumable. This may be the case in arrangements where the aerosol generating material is liquid, solid, or gel.

The non-combustible aerosol provision system (e.g. the aerosol provision device or consumable thereof) may comprise an aerosol-modifying agent. An aerosol-modifying agent is a substance, typically located downstream of the aerosol generation area, that is configured to modify the aerosol generated, for example by changing the taste, flavour, acidity or another characteristic of the aerosol. The aerosol-modifying agent may be provided in an aerosol-modifying agent release component, that is operable to selectively release the aerosol-modifying agent. The aerosol-modifying agent may, for example, be an additive or a sorbent. The aerosol-modifying agent may, for example, comprise one or more of a flavourant, a colourant, water, and a carbon adsorbent. The aerosol-modifying agent may, for example, be a solid, a liquid, or a gel. The aerosol-modifying agent may be in powder, thread or granule form. The aerosol-modifying agent may be free from filtration material.

In some embodiments, the non-combustible aerosol provision system, such as a non-combustible aerosol provision device thereof, may comprise a power source. The power source may, for example, comprise an electric power source or an exothermic power source. In some embodiments, the exothermic power source comprises a carbon substrate which may be energised so as to distribute power in the form of heat to an aerosol-generating material or to a heat transfer material in proximity to the exothermic power source. In some embodiments, the power source comprises a battery, such as a rechargeable battery. Examples of suitable batteries include, for example, a lithium battery (such as a lithium-ion battery), a nickel battery (such as a nickel-cadmium battery), and an alkaline battery. The power source is connected to the heating assembly and configured to supply power to the heating assembly, such that the power source is configured to supply power to the heating assembly, and the heating assembly is configured to use power supplied by the power source to heat aerosol generating material.

In some embodiments, the aerosol provision system (e.g. the aerosol provision device thereof) comprises a controller configured to control operation of the aerosol provision system. It will be appreciated the functionality of the controller can be provided in various different ways, for example using one or more suitably programmed programmable computer(s) and / or one or more suitably configured application-specific integrated circuit(s) / circuitry / chip(s) / chipset(s) configured to provide the desired functionality. It will be appreciated the controller may comprise a microcontroller (MCU), an application specific integrated circuit (ASIC), a central processing unit (CPU), and/or a micro-processor. The controller may be considered to be processing circuitry. The operations of the controller are generally controlled at least in part by software programs executed on the controller. Generally, the aerosol provision device of the aerosol provision system comprises the controller, but this need not always be the case, and in arrangements the consumable may comprise the controller.

The controller may be configured to control operation of the aerosol generator, e.g. the heating assembly thereof. While many arrangements will be discussed with regard to the controller being configured to control operation of the heating assembly of the aerosol generator, these may be more generally applied to an aerosol generator which may or may not comprise a heating assembly. The controller is connected to the power source and the aerosol generator, and is configured to control the supply of power from the power source to the aerosol generator. As such, the controller may be configured to control the heating of aerosol generating material by the heating assembly.

The controller may be configured to heat aerosol generating material in accordance with a heating profile, e.g. by causing the heating assembly to heat the aerosol generating material in accordance with the heating profile. A heating profile refers to the variation of temperature of a material over time. For example, the varying temperature of a heating element measured at the heating element for the duration of a session of use may be referred to as the heating profile of that heating element (or equally as the heating profile of the heating assembly unit comprising that heating element). The heating element provides heat to the aerosol generating material during use, to generate an aerosol. The heating profile of the heating element therefore induces the heating profile of aerosol-generating material, e.g. which is disposed near the heating element.

The aerosol provision system (e.g. the aerosol provision device thereof) may also comprise a memory. The memory may comprise volatile memory, such as random access memory (RAM) or flash memory, and/or non-volatile memory, such as read only memory (ROM), electrically erasable read only memory (EEROM), or electrically erasable programmable read only memory (EEPROM). In embodiments, this memory comprises controller memory which is a part of the controller, and which may be integrated in the controller. The memory may additionally or alternatively comprise external memory, connected to the controller, and external to the controller. The external memory may be removable from the aerosol provision system (e.g. the aerosol provision device thereof), and may comprise an SD card or a microSD card. Software programs for execution by the controller may be stored on the memory.

The aerosol provision system (e.g. the aerosol provision device thereof) may also comprise a control interface for receiving inputs and/or providing outputs. For instance, the control interface may be configured to receive inputs, and provide input data to the controller corresponding to the received inputs. The control interface may be configured to receive output data from the controller, and provide outputs corresponding to the output data received from the controller.

The control interface may comprise a user interface comprising one or more input components for receiving inputs from a user, and one or more output components for providing outputs to a user. The one or more input components are configured to receive inputs from a user, and provide corresponding input data to the controller. The one or more input components may be configured to receive the inputs from a user in the form of physical manipulation by the user. The one or more input components may comprise a button (such as a rolling button), a switch, a dial, a microphone, a camera, an accelerometer, a touchscreen, or any plurality or combination thereof. The one or more input components may be assigned to functions such as switching the aerosol provision device on and off, and selecting an operating mode of the aerosol provision system (as will be discussed in more detail herein). The one or more output components are configured to receive output data from the controller, and provide corresponding outputs to a user. The one or more output components may comprise a light, such as an LED, a speaker, a haptic component, a display, such as a screen, or any plurality or combination thereof. The controller may be configured to cause the one or more output components to provide an output indicative of a property of the aerosol provision system, for example a property of the aerosol generating material, or the remaining power of the power source, and so forth.

The control interface may comprise one or more sensors for detecting one or more properties relating to the aerosol provision system (e.g. the aerosol provision device thereof), which may be configured to provide input data to the controller comprising sensor data relating to the detected one or more properties. The one or more sensors may comprise a puff sensor configured to detect a user inhalation on the aerosol provision system. The one or more sensor may comprise a temperature sensor configured to detect a temperature relating to the aerosol provision system, e.g. the temperature of the heating assembly, the heating element, the consumable, the aerosol generating material, the environment surrounding the aerosol provision system. The one or more sensors may comprise a consumable detection sensor configured to detect when a consumable has been engaged with the aerosol provision device, e.g. at least partly received by the aerosol provision device. The one or more sensors may comprise a consumable identification sensor configured to detect a property of a consumable, e.g. a property of the aerosol generating material of a consumable. The one or more sensors may comprise a biometric sensor configured to detect a biometric property relating to the user, e.g. a fingerprint, a heart rate, a breathing property.

The control interface may comprise communication circuitry configured to connect to one or more further devices, and/or communicate data with one or more further devices. The communication circuitry communicating data with one or more further devices may comprise sending data to one or more further devices (e.g. to transfer data from the aerosol provision device to the one or more further devices), receiving data from one or more further devices (e.g. to transfer data from the one or more further devices to the aerosol provision device), or both sending data to and receiving data from one or more further devices. The term "send" with regard to data can be understood to be the emission of data from a device, while the term "transfer" can be understood to be the emission of data from a device and receipt of the data by another device. For example, the communication circuitry may be configured to establish a data connection with one or more further devices, e.g. and communicate data with one or more further devices using the data connection. The data connection may be impermanent or otherwise transient, in the sense that the data connection may be established for a period of time necessary to carry out specific functionalities, but may also be disconnected when not required. In this context, a further device to the aerosol provision device may be another aerosol provision device, a consumable, or (as described further herein) an external power source device, or a computing device. In some embodiments, the communication circuitry is integrated into the controller, and in other embodiments it is implemented separately (comprising, for example, separate application-specific integrated circuit(s), circuitry, chip(s), and/or chipset(s)).

The communication circuitry may be configured to receive inputs, comprising data, from a further device, and provide (e.g. send) outputs, comprising data, to a further device. The communication circuitry may be configured to provide input data to the controller corresponding to inputs, comprising data, received from a further device, and configured to provide (e.g. send) outputs, comprising data, to a further device corresponding to output data provided by the controller. As such, the controller may receive (via the communication circuitry) data sent to the aerosol provision system (e.g. the aerosol provision device thereof) by a further device, and the controller may send (via the communication circuitry) data from the aerosol provision system (e.g. the aerosol provision device thereof) to a further device. The data received from the further device may comprise instructions for the controller of the aerosol provision system (e.g. the aerosol provision device thereof) to perform one or more control actions. The data provided to (e.g. sent to) the further device may comprise instructions for the further device to perform one or more control actions. Reference to a device sending data to a further device may be understood to correspond to the controller of the device causing communication circuitry of the device to send data to be received by control circuitry of the further device, corresponding input data to which is then received by the controller of the further device from the control circuitry of the further device.

The communication circuitry may comprise a wireless communication module configured to establish a wireless data connection with one or more further devices, and/or communicate data with one or more further devices using a wireless data connection. For example, the wireless communication module may comprise a Bluetooth module (e.g. a Bluetooth Low Energy module), a ZigBee module, a WiFi module (e.g. a Wifi Direct module), a 2G module, a 3G module, a 4G module, a 5G module, an LTE module, an NFC module, an RFID module, an optical communication module configured to communicate data using optical signals, an audio communication module configured to communicate data using audio signals, or other wireless communication module. As a result, the wireless data connection may correspondingly be a Bluetooth connection (e.g. a Bluetooth Low Energy connection), a ZigBee connection, a WiFi connection (e.g. a WiFi Direct connection), a 2G connection, a 3G connection, a 4G connection, a 5G connection, an LTE connection, and NFC connection, and RFID connection, an optical data connection, and audio data connection, or other wireless data connection. More generally, it will be appreciated that any wireless protocol can in principle be used for the wireless data connection.

The communication circuitry may also or alternatively comprise a wired communication module configured to establish a wired data connection with one or more further devices, and/or communicate data with one or more further devices using a wired data connection. For example, the wired communication module may comprise a wired interface such as a USB interface (e.g. a USB-A interface, a USB-B interface, a mini-USB interface, a micro-USB interface, a USB-C interface, or a USB-3 interface), a Thunderbolt interface, or other wired data interface. As a result, the wired data connection may correspondingly be a USB connection (e.g. a USB-A connection, a USB-B connection, a mini-USB connection, a micro-USB connection, USB-C connection, or a USB-3 connection), a Thunderbolt connection, or other wired data connection. More generally, it will be appreciated the wired module may comprise any wired interface using a wired protocol which enables the transfer of data, according to, for example, a packet data transfer protocol, and may comprise pin or contact pad arrangements configured to engage cooperating pins or contact pads on a further device which can be connected to the aerosol provision system (e.g. aerosol provision device thereof).

The controller may be configured to control operation of the aerosol provision system in dependence of input data received from the control interface. This input data may comprise input data provided from the one or more input components of the user interface, input data provided from the one or more sensors comprising sensor data, and input data provided from the communication circuitry corresponding to data received from a further device. In dependence of an event (e.g. responsive to the event) such as the receipt of input data, the controller may be configured to perform a control action, such as initiate functionality of a component of the aerosol provision system (e.g. cause the heating assembly to begin heating, cause the one or more output components to provide outputs to a user, or cause the communication circuitry to provide outputs to further device), change the parameters associated with functionality of a component of the aerosol provision system, enable or disable functionality of a component of the aerosol provision system.

The controller may be configured to perform a control action in dependence of an event, in which case the controller will determine whether and how to perform the control action depending on the occurrence or not of the event, and e.g. depending on the properties of the event. For example, the controller may cause a heating assembly to heat aerosol generating material in dependence of a detected property of a consumable, such that a particular heating profile is used for a particular detected property of a consumable when heating is initiated by the controller, and for another particular detected property of a consumable no heating is used. However, while this control action may be performed directly after the event, i.e. as triggered by the event, this need not be the case, and the control action may be performed at a later time. The controller may be configured to perform a control action responsive to an event, in which case the controller will then perform the action (directly after or at a later time), i.e. the performance of the action is triggered by the event. For example, the controller may cause a heating assembly to heat aerosol generating material responsive to a puff sensor detecting a user inhalation, directly after the inhalation is detected.

The controller may also be configured to control operation of the aerosol provision system (e.g. the aerosol provision device thereof) according to a selected mode (or plural selected modes). Each mode is associated with predetermined rules regarding the functionality of one or more components of the aerosol provision system (e.g. the aerosol provision device thereof). For example, operating parameters and/or logic may vary between modes. These components can include, but are not limited to, the memory, the control interface, the aerosol generator, and the power source. In some modes, particular functionality of one or more components may be enabled, such that the controller can cause the functionality to be performed by the aerosol provision system (e.g. the aerosol provision device thereof) when input data comprising an instruction to perform the functionality is received, e.g. by the controller. However, in some modes, particular functionality of one or more components may be disabled, such the controller does not cause the functionality to be performed by the aerosol provision system (e.g. the aerosol provision device thereof) when input data comprising an instruction to perform the functionality is received, e.g. by the controller.

The consumable itself may comprise either or both of a controller and memory. The controller and memory of the consumable may use any of the discussed above in regard to the aerosol provision system. The consumable may also likewise comprise a control interface for receiving inputs and/or providing outputs, which may use any of the features of the control interface discussed above in regard to the aerosol provision system. For instance, the control interface may comprise communication circuitry configured to connect to one or more further devices, and enable a data connection to be established with one or more further devices. In this context, a further device to the consumable may be the aerosol provision device, another consumable, or (as described further herein) an external power source device, or a computing device.

The aerosol provision device may comprise a charging interface for receiving power from an external power source. For example, the charging interface may be for receiving power from an external power source comprising a charging cable. Also provided as part of a system comprising the aerosol provision system may be an external power source device configured to connect to the aerosol provision device, for example the charging interface thereof, and supply power to the aerosol provision device. The external power source device may comprise an electrical power source, comprising a battery, such as a rechargeable battery. Examples of suitable batteries include, for example, a lithium battery (such as a lithium-ion battery), a nickel battery (such as a nickel-cadmium battery), and an alkaline battery. The external power source device may be configured to provide power to charge the electrical power source of the aerosol provision device. The external power source device may be a "charging case", comprising a recess configured to receive at least part of the aerosol provision device, wherein the external power source device is configured to connect to the charging interface when the aerosol provision device is received in the recess.

The external power source device may comprise either or both of a controller and memory. The controller and memory of the external power source device may use any of the features discussed with regard to the controller and memory discussed above in regard to the aerosol provision system. The controller of the external power source device may be configured to control the supply of power to the aerosol provision device. The external power source device may also likewise comprise a control interface for receiving inputs and/or providing outputs, which may use any of the features of the control interface discussed above in regard to the aerosol provision system. For instance, the control interface may comprise communication circuitry configured to connect to one or more further devices, and enable a data connection to be established with one or more further devices. In this context, a further device to the external power source device may be the aerosol provision device, the consumable, another external power source device, or (as described further herein) a computing device.

The charging interface of the external power source device may also be configured to communicate data with the external power source, when connected. In such arrangements, the charging interface corresponds to a wired communication component (i.e. of the communication circuitry of the external power source device) configured to communicate data using a wired data connection. The charging interface may comprise a wired interface such as a USB interface (e.g. a USB-A interface, USB-B interface, mini-USB interface, micro-USB interface, USB-C interface, or USB-3 interface), Thunderbolt interface, or other wired interface.

A system comprising the aerosol provision system may also comprise one or more computing devices, configured to connect to the aerosol provision system (e.g. the aerosol provision device thereof), and communicate with the aerosol provision system (e.g. the aerosol provision device thereof) using a data connection (e.g. wired or wireless). The one or more computing devices may comprise a local computing device which may be controlled or owned by the user, which may comprise a smartphone, a tablet, a personal computer (PC), a wearable device (e.g. a smart watch), a refilling device for refilling an aerosol provision device or consumable with aerosol generating material, or a connectivity hub. Additionally or alternatively, the one or more computing devices may comprise a remote computing device, which may be not controlled or owned by the user, such as a server.

The computing device may comprise either or both of a controller and memory. The controller and memory of the computing device may use any of the features discussed with regard to the controller and memory discussed above in regard to the aerosol provision system. The computing device may also likewise comprise a control interface for receiving inputs (e.g. from a user) and/or providing outputs (e.g. to a user), which may use any of the features of the control interface discussed above in regard to the aerosol provision system. The control interface may comprise communication circuitry configured to connect to a further device, and communicate data with a further device. In this context, a further device to the computing device may be the aerosol provision device, the consumable, the external power source device, or another computing device.

The aerosol provision system (e.g. the aerosol provision device thereof) may establish communication with a remote computing device directly, using one of the wireless protocols described above, for example by connecting with a communication node (such as a telecommunications "base station") which provides connectivity with the remote computing device. Alternatively or in addition, the aerosol provision system (e.g. the aerosol provision device thereof) may establish communication with the remote computing device via a local computing device, for example using a wired or wireless communication protocol to communicate with a local computing device, which then communicates with the remote communication device. The local computing devices may also communicate indirectly with the remote computing device via a relay device (which may be a further computing device), either to fulfil an aspect of their own functionality, or on behalf of the aerosol provision system (for example as a relay or co-processing unit).

The computing devices may also send data to each other, either directly or indirectly via any of the wired or wireless communication protocols set out above. Thus, in embodiments, a given first device and second device (e.g. any of the aerosol provision device, consumable, external power source device, and computing devices) may generally be in either a connected or unconnected state with respect to each other. The unconnected state may also be referred to as an idle state, and in such a state a given first device may not be detectable by other second devices (i.e. the first device is not transmitting any signalling enabling its existence and/or identity to be determined), or it may be available for establishing a data connection with a second device (i.e. it may be advertising its existence and/or identity using advertisement signalling). In a connected state, the first and second devices are configured such that data may be transferred from the first to the second device (e.g. 'uplink' transmission) and/or transferred from the second to the first device (e.g. 'downlink' transmission). Accordingly, establishment of a data connection between a first and second device may be considered to comprise the establishment of any state wherein the two devices can exchange data, regardless of the direction of data transfer. Non-limiting examples of connected states are the establishment of an RRC connected state according to the Long Term Evolution (LTE) standard, or a connected state according to the Bluetooth (e.g. Bluetooth Low Energy (BLE)) standard.

When a first and second device are configured to communicate wirelessly, a transition from an unconnected to a connected state will generally follow a procedure such as the following. In an initial enquiry step, a first device (for example, an aerosol provision device or consumable, although this may be applied to any aforementioned device) establishes the existence of a second device (for example, a computing device, although this may be applied to any aforementioned device) by receiving a beacon signal or other identifying signal from the second device. In an authentication step, the first and second devices exchange messaging to establish information relating to the data transfer protocol to be used for exchanging data (for example comprising coding and encryption parameters to be used when exchanging data). In a data transfer step, the first and second devices transfer data over a wireless interface established in accordance with an agreed data transfer protocol. This data transmission may be bi- or uni-directional. The data communication process for wired communications may be broadly similar with the difference that data is sent over a wired interface as opposed to a wireless interface.

A system comprising any aerosol provision system and any combination of an external power source device and computing devices, as described further herein, may be used to support functions of the aerosol provision system. These functions may be referred to as "connected" functions, in that they relate to the transmission of data between the aerosol provision system and other connected devices (e.g. one or more computing devices). Such an arrangement may be considered advantageous for enhancing aspects of the operation of an aerosol provision system. For example, an aerosol provision device enabled to receive data from further devices may be able to receive software updates or updated parameters (e.g. relating to the generating of aerosol by an aerosol generator) from a computing device. Determination of suitable parameters may entail significant processing overheats which are more efficiently carried out on computing devices, having higher processing capability than is typically provided on an aerosol provision system, where low energy consumption (for extended battery life) and reduced complexity (for cost reduction) are generally considered advantageous.

A computing device (such as a smartphone) may also be used by a user to provide inputs to the control interface of the aerosol provision system, which may be particularly advantageous where motivations exist to keep input components or output components on an aerosol provision system to a minimum, for example to reduce complexity and cost. Thus an application ("app") running on a computing device may support what are in effect offloaded or relayed functions for an aerosol provision device which has a direct or indirect (e.g. relayed) data connection with the computing device according to the approaches described above. Hence, the aerosol provision system may, via its communication circuitry, send data to a computing device (e.g. data based on sensor data received by the controller of the aerosol provision system, relating to the usage of the aerosol provision system), and the computing device may provide information relating to the aerosol provision system to the user via the app. Alternatively, or in addition, the user may select a control action via the app, and data relating to the control action may be sent by the computing device to the aerosol provision system, whereupon the controller of the aerosol provision system performs the control action.

Herein will be described various methods of operating an aerosol provision system. While these methods may be described in the context of control of an aerosol provision system by a controller of the aerosol provision system (e.g. the aerosol provision device thereof), it is recognised that these methods may be performed by any of the controllers of a broader system comprising any combination of one or more aerosol provision devices, one or more of consumables, one or more external power source devices, and one or more computing devices, or by any of these controllers in combination. In particular, as each of these controllers may be able to communicate with some or any of the other controllers in a system comprising any of an aerosol provision device, a consumable, an external power source, and a computing device, data such as instructions to perform one or more control actions may be communicated between any of these, either directly or indirectly. As such, a method of operating an aerosol provision system may be performed by a "distributed" aerosol provision system comprising any combination of the aerosol provision device, the consumable, the external power source device, and the computing device discussed above, for example performed by any one or more controllers of these. Accordingly, even though particular method steps may be described in the context of the controller of a particular device, it is anticipated that such control actions may be, where feasible, in alternative arrangements be performed by another of these controllers, and that various method steps may be performed by various corresponding different controllers.

Various embodiments will now be described in more detail.

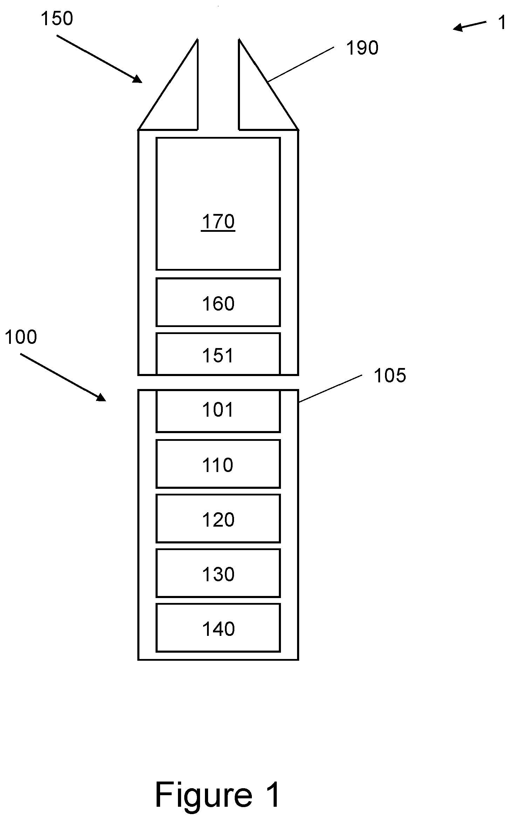

Figure 1 shows a cross-sectional view through a schematic representation of a two-piece aerosol provision system 1 in accordance with certain embodiments.

The aerosol provision system 1 is a two-piece aerosol provision system, comprising an aerosol provision device 100 and a consumable 150 comprising aerosol generating material 170. The aerosol provision device 100 comprises an outer housing 105, a memory 110, a controller 120 configured to control operation of the aerosol provision system 1, a control interface 130 for receiving inputs to the aerosol provision device and providing outputs from the aerosol provision device 100, and a power source 140 configured to supply electrical power for operation of the aerosol provision device 100. The outer housing 160 may also enclose at least partly the other components of the aerosol provision device 100, namely the memory 110, controller 120, the control interface 130, and the power source 140. The aerosol provision device 100 is a handheld electronic vapour device, meaning that the outer housing 160 enclosing the other components is dimensioned and configured to be held in the hand of a user. In other words, the device is portable.

The consumable 150 comprises a reservoir containing liquid aerosol generating material 170, and a mouthpiece 190 through which the user can draw aerosol that has been generated from the aerosol generating material 180. The consumable also comprises a heating assembly 160 configured to heat the aerosol generating material 170. In use, an engagement interface 101 of the aerosol provision device 100 is engaged with an engagement interface 151 of the consumable, each of these engagement interfaces comprising mechanical engagement means for mechanically coupling to one another. Each engagement interface 101, 151 also comprises an electrical engagement interface, such that the aerosol provision device 100 can be electrically connected with the consumable 150. The electrical engagement interface 101 of the aerosol provision device is configured to supply electrical power, from the power source 140, to the consumable, in particular to the heating assembly 160 of the consumable. The controller 120 is configured to control the supply of electrical power from the power source 140 to the heating assembly 160, so as to control the heating of the aerosol generating material 170 by the heating assembly 160.

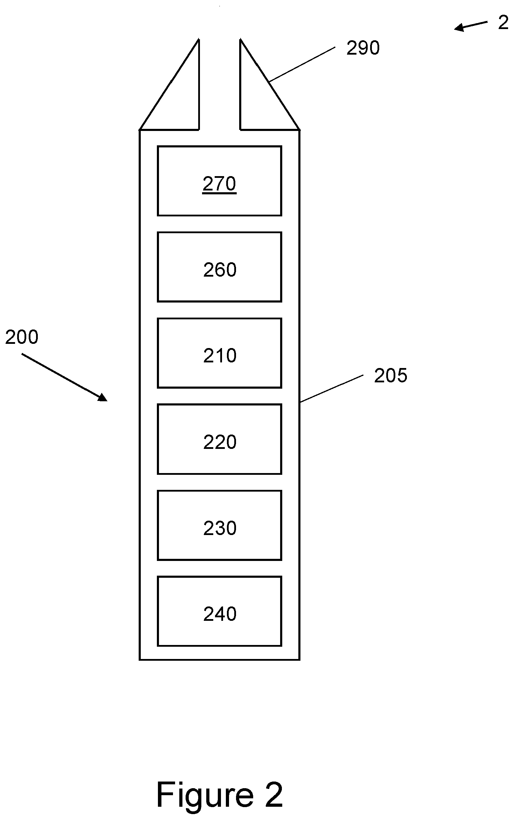

Figure 2 shows a cross-sectional view through a schematic representation of a one-piece aerosol provision system 2 in accordance with certain embodiments.

The aerosol provision system 2 is a one-piece aerosol provision device 200. The aerosol provision device 200 comprises an outer housing 205, a memory 210, a controller 220 configured to control operation of the aerosol provision device 200, a control interface 230 for receiving inputs to the aerosol provision device and providing outputs from the aerosol provision device 200, a power source 240 configured to supply electrical power for operation of the aerosol provision device 200, a reservoir containing liquid aerosol generating material 270, and a heating assembly 260 configured to heat the aerosol generating material 270. The outer housing 205 may also enclose at least partly the other components of the aerosol provision device 200, namely the memory 210, the controller 220, the control interface 230, the power source 240, the reservoir containing liquid aerosol generating material 270, and the heating assembly 260. The aerosol provision device 200 also comprises a mouthpiece 290 through which the user can draw aerosol that has been generated from the aerosol generating material 270.

The aerosol provision device 200 is a handheld electronic vapour device, meaning that the outer housing 205 enclosing the other components is dimensioned and configured to be held in the hand of a user. In other words, the device is portable. The aerosol provision device 200 is a disposable one-piece aerosol provision device, which the user can dispose of once the aerosol generating material 180 has been exhausted, and which is not configured to receive a consumable, and is not configured to be refillable by the user.

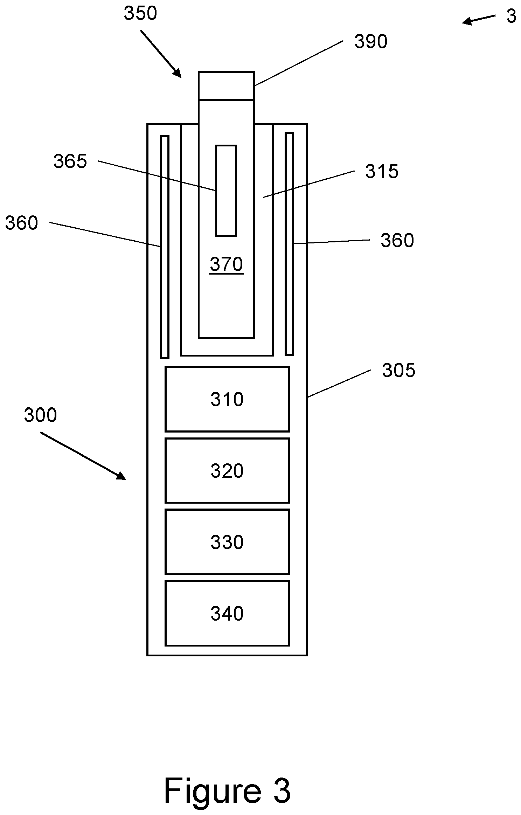

Figure 3 shows a cross sectional view through a schematic representation of a two-piece aerosol provision system 3 in accordance with certain embodiments.

The aerosol provision system 3 is a two-piece aerosol provision system, comprising an aerosol provision device 300 and a consumable 350 comprising aerosol generating material 370. The aerosol provision device 300 comprises an outer housing 305, a memory 310, a controller 320 configured to control operation of the aerosol provision system 3, a control interface 330 for receiving inputs to the aerosol provision device and providing outputs from the aerosol provision device 300, a heating assembly comprising a magnetic field generator 360 configured to generate a varying magnetic field, and a power source 340 configured to supply electrical power for operation of the aerosol provision device 300. The outer housing 305 may also enclose at least partly the other components of the aerosol provision device 300, namely the controller 320, the control interface 330, the magnetic field generator 360, and the power source 340. The aerosol provision device 300 is a handheld electronic vapour device, meaning that the outer housing 305 enclosing the other components is dimensioned and configured to be held in the hand of a user. In other words, the device is portable.

The consumable 350 comprises aerosol generating material 370 which is in the form of a solid or gel. The consumable 350 is in a rod format, and is received by a heating chamber 315 of the aerosol provision device 300. The magnetic field generator 360 is configured cause the heating chamber 315 to become heated, and the aerosol generating material 370 of the consumable 350 within the heating chamber 315. To do this, the heating assembly comprises a heating element 365 in the consumable, having susceptor material which is susceptible to heating by penetration with a varying magnetic field generated by the magnetic field generator 360. The magnetic field generator 360 is configured to generate this varying magnetic field, which penetrates the heating chamber 315, and the heating element 365 of the consumable 350, causing it to become heated, and in turn heat the aerosol generating material 370.

In this arrangement, the consumable comprises a mouthpiece 390, through which the user can draw aerosol that has been generated from the aerosol generating material 370. The aerosol provision device 300 and consumable 350 do not require respective engagement interfaces configured to enable the aerosol provision device 300 and consumable 350 to be electrically connected to one another, as an electrical connection therebetween is not used to heat the aerosol generating material 370.

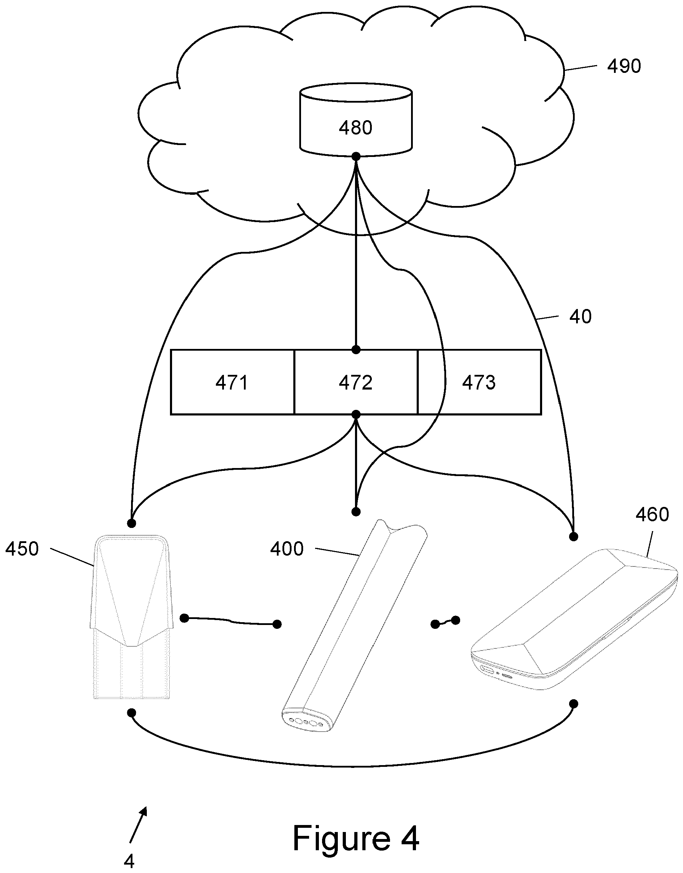

Figure 4 shows a schematic representation of system, comprising an aerosol provision system 4 comprising an aerosol provision device 400 and a consumable 450, an external power source device 460, local computing devices 471, 472, 473, and a remote computing device 480. The aerosol provision device 400 and consumable 450 may have any of the properties of the aerosol provision devices 100, 200, 300, and consumables 150, 350 discussed above.

In this arrangement, the remote computing device 480 is a server, which exists on the cloud 490. The aerosol provision system 4 may correspond to any of the aerosol provision systems 1, 2, or 3 discussed above, or any other aerosol provision system. Each of the local computing devices 471, 472, 471 are connected to each other, as well as being connected to each further device. Various data connections 40 between each of these devices is depicted, illustrating how data may be sent between any given first and second device.

In use, when these data connections 40 are established (either using wired or wireless protocols), data can be sent from a first device, such as the aerosol provision device 400, to a second device, such as the remote computing device 480, either directly via the direct data connection between these two devices (if it exists), or indirectly, relayed by another device or multiple other devices.

In the case of the aerosol provision device 400 and the remote computing device 480, data such as usage data collected by the aerosol provision device can be sent to the remote computing device 480 by sending the data to the external power source device 460 through a wired data connection. Then, the external power source device sends the data to first local computing device 471, which is a smartphone 471, through a wireless data connection. The wireless data connection between the smartphone 471 and the external power source device 460 is a Bluetooth connection, established using a Bluetooth module of the smartphone 471 and a Bluetooth module of the external power source device 460.

The smartphone 471 then sends the data to the remote computing device 480 through a wireless data connection. The wireless data connection between the smartphone 471 and the remote computing device 480 is a 3G wireless connection, established using a 3G module of the local computing device, connected with a corresponding communication node (such as a telecommunications "base station") which provides connectivity with the remote computing device 480.

A user may also use this network of data connections 40 to cause control actions to be performed on the aerosol provision device 400 by the controller thereof. Using an app on second local computing device 472 such as a smartphone or a personal computer, the user can select a control action, and the personal computer 472 then sends data relating to the control action to the remote computing device 480 through a wired data connection. The remote computing device 480 then sends data relating to the control action to the smartphone 471, using the 3G wireless connection discussed above.

The smartphone 471 then sends data relating to the control action to the external power source device 460 using the Bluetooth connection discussed above, and the external power source device 460 then sends data relating to the control action to the aerosol provision device 400 through the wired data connection between the aerosol provision device 400 and the external power source device 460. The data relating to the control action is received by the controller of the aerosol provision device 400, and the controller causes the aerosol provision device 400 to perform the control action.

For an aerosol provision device, such as aerosol provision devices 100, 200, 300, 400, it is desirable to generate use data relating to use of the aerosol provision device. This use data can be an important source of information relating to how an aerosol provision device is functioning, and how a user is using an aerosol provision device. This information may be highly useful in providing insight into the success of implementation of particular functionality of the aerosol provision device, as well as insight into the behaviours of a user or group of users, in order to allow the causes of ineffective present functionality to be identified and remedied, and the provision of future functionality to be improved and optimised.

For instance, with reference to the aerosol provision device 100 of Figure 1, the memory 110 may store a collection of use data, the collection of use data comprising a plurality of entries of use data. While this discussion will be made with reference to Figure 1 for the purposes of illustrating the inventions of the present application, it is noted that these techniques may equally be applied in the context of the other devices and systems discussed throughout this application, including the aerosol provision devices 100, 200, 300, 400 and aerosol provision systems 1, 2, 3, 4.

Each of these entries of the collection of use data may denote the occurrence of a respective use event or a property relating to the aerosol provision device 100. Each of the entries of use data may also comprise a timestamp, associated with the time at which the use event occurred or associated with the time of the property relating to the aerosol provision device 100. This timestamp may include a date, and/or a time specified to hours, minutes, or seconds. The collection of use data may also comprise entries of different types of use data. For example, the plurality of entries may comprise entries of a first type of use data and entries of a second type of use data, wherein the entries of a first type of use data denote the occurrence of respective use events of a first type or properties of a first type, and the entries of the second type of use data denote the occurrence of respective use events of a second type or properties a second type.

These entries of a particular type of use data may denote the occurrence of a use event or a property, for example relating to any component of the aerosol provision device 100 or of a broader system comprising the aerosol provision device (such as system 4), e.g. at a time indicated by the timestamp of the entry. Entries of a particular type of use data which denote the occurrence of a use event may specify the type of use event which has occurred (either explicitly, or implicitly e.g. as inferable from the location in which the entries are stored), as well as comprising a timestamp which indicates the time at which the use event occurred. A use event may be understood to include any event relating to use of the aerosol provision device 100 or a broader system comprising the aerosol provision device 100 (such as system 4), or any event relating to a user, which may or may not involve a user of the aerosol provision device 100. Entries of a particular type of use data which denote a property may specify the type of the property (either explicitly, or implicitly) and the value of a property, as well as comprising a timestamp which indicates the time at which the property had that value. A property may be understood to include any property relating to the aerosol provision device 100 or a broader system comprising the aerosol provision device (such as system 4), and any property relating to a user. Various examples of entries of types of use data will now be discussed.

For example, entries of a particular type of use data may denote a property relating to a power source 140 of the aerosol provision device. This property relating to the power source 140 of the aerosol provision device may be a charge level of the power source 140, such as a relative level at which the power source 140 is charged in comparison with the power source 140 being fully charged. This property relating to the power source 140 may also be a charging status of the power source 140, relating to whether the power source 140 is receiving a supply of power from an external power source, or how the power source 140 is receiving a supply of power from an external power source (e.g. a voltage or current). Furthermore, entries of a particular type of use data may denote the occurrence of a use event relating to the power source 140, such as the connection of the power source 140 to a supply of power from an external power source.

Entries of a particular type of use data may denote the occurrence of a respective use event or a property relating to the control interface 130 of the aerosol provision device 100, such as communication circuitry of the control interface 130. For example, entries of a particular type of use data may denote a property relating to a connected status of the communication circuitry. This property may be a type of data connection established by the communication circuitry (e.g. wired, wireless, a particular type of wired connection or wireless connection). This property may be a type of further device which the communication circuitry has established a data connection with, or an identifier of a further device which the communication circuitry has established a data connection with (such as a unique identifier of the further device). Further, entries of a particular type of use data may denote the occurrence of a use event relating to the communication circuitry, such as the connection of the communication circuitry to a further device.

In some cases, entries of a particular type of use data may denote the occurrence of a respective use event or a property relating to the controller 120. For example, the controller 120 may be configured to control operation of the aerosol provision device 100, at least in part by the execution of software by the controller 120. The property may be a property of the software, for example a property of version information relating to the software, which is stored in the memory 110. Entries of a particular type of use data may denote the occurrence of a use event relating to the controller 120, such as the implementation of new software for execution by the controller 120. Entries of a particular type of use data may, in some cases, also denote the occurrence of a respective use event or a property relating to the memory 110. The property may be a remaining data capacity of the memory 110, or an amount of data stored in the memory 110. Further, entries of a particular type of use data may denote the occurrence of a use event relating to the memory 110, such as the deleting of (all) data from the memory 110.

Entries of a particular type of use data may denote the occurrence of a respective use event or a property relating to use of the aerosol provision device 100 with aerosol generating material. For example, a type of use data may denote the occurrence of aerosol generating material (e.g. in a consumable) being provided to the aerosol provision device 100. A type of use data may also denote the occurrence of a session of generating aerosol from aerosol generating material by the aerosol provision device 100 (e.g. by an aerosol generator of the aerosol provision system 1), or the occurrence of an inhalation of aerosol generated from aerosol generating material by the aerosol provision device 100 (again, e.g. by an aerosol generator of the aerosol provision system 1). Entries of a type of use data may also denote a property relating to a type of aerosol generating material or consumable provided to the aerosol provision device 100. Entries of a type of use data may also denote a property relating to a number of inhalations or sessions within a particular period, for example an hour, a day, a week, a month, or a year.

These entries of use data discussed above, and any other entries of use data, may be stored in the memory 110 according to various different approaches. For example, entries of different types of use data may be stored in different locations in the memory 110. These different locations may be physical locations, or virtual locations (e.g. within virtual data structures created in the memory 110). As discussed above, the memory 110 may comprise controller memory which is a part of the controller 120, and which may be integrated in the controller 120, as well as external memory, which is connected to the controller 120, and external to the controller 120. Each of the controller memory and external memory may comprise different forms of memory, including volatile memory and/or non-volatile memory.

The controller 120 may be configured to generate (new) entries of use data, and store these generated entries in the collection of use data in the memory 110. For example, the controller 120 is configured to generate entries of a particular type of use data, and store the generated entries of the particular type of use data in the memory, responsive to the occurrence of triggers. These triggers to generate and store the entries may be different for different types of use data, such that entries of a particular type of use data are generated and stored in response to the occurrence of particular corresponding triggers. These triggers may be implemented in logic and/or software of the controller 120.

For example, these triggers may comprise the passing of predetermined times, such that at the passing of the predetermined times the controller is configured to generate entries of particular types of use data. For example, the controller may be configured to generate entries of a particular type of use data periodically. These predetermined times may occur on a timing schedule, such as a regular timing schedule, wherein a predetermined time passes every second, minute, hour, day, or any other period of time. These predetermined times may be stored in the memory 110, and/or calculated by the controller 120 according to logic and/or software.

The passing of these predetermined times may in particular be used to generate and store entries which denote a property relating to use of the aerosol provision device 100, such as in any of the cases described above. This may be particularly advantageous, as it can allow the controller 120 to, at predetermined times, repeatedly generate and store entries of use data for particular properties of the aerosol provision device 100. These entries can then be referred to in future to provide an illustration of how particular properties vary over time, which can be used to arrive at an understanding of how the aerosol provision device 100 is functioning and how it is being used by a user. For example, entries of a particular type of use data which denote a charge level of the power source 140 may be generated and stored at predetermined times over the course of several days, with the result that entries of this type of use data in the collection of use data in the memory can illustrate how quickly the power source 140 is expending power.

These triggers may also comprise use events, such as use events which are denoted by the respective entries of a particular type of use data. For instance, in the case that a particular type of entries denotes the occurrence of a respective use event, the triggers for the controller 120 to generate and store this entry of use data may comprise the occurrence of the use event. In other words, the controller 120 is configured to generate and store (new) entries of this particular type of use event in response to the occurrence of the use event whose occurrence is denoted by the entries of the particular type of use data. This approach may be applied in any of the cases described above in which entries of a particular type denote the occurrence of a respective use event. This approach may also be particularly useful in allowing the controller 120 to generate and store entries of use data which denotes the occurrence of a use event as and when this use event occurs.

The controller 120 may be configured to determine the occurrence of a particular event by determining that one or more predetermined criteria associated with the particular event are met. For example, to refer to a use event which is an inhalation as mentioned above, the occurrence of this use event may be determined by the detection of an inhalation by a puff sensor of the control interface 130, in which case the predetermined criteria may straightforwardly be that the controller must receive input data indicating that the puff sensor has detected an inhalation in order to determine the occurrence of a use event which is an inhalation. As another example, to refer to a use event which is a connection of the power source 140 to a supply of power, the occurrence of this use event may be determined by the detection of an application of a voltage above a predetermined threshold to a charging interface of the aerosol provision device 100, in which case the predetermined criteria may be that the controller must determine that a voltage above a predetermined threshold has been applied to the charging interface in order to determine the occurrence of a use event which is the connection of the power source 140 to a supply of power.

These one or more predetermined criteria associated with the particular event may be implemented by software and/or logic of the controller 120. The one or more predetermined criteria associated with the particular event may be stored in the memory 110. As the controller 120 is provided with input data by the control interface 130, the controller 120 may be configured to test the input data to determine whether one or more predetermined criteria for particular events have been met, and when it is determined that the one or more predetermined criteria for a particular event has been met, it is determined that the particular event has occurred.

The collection of use data may also comprise entries of particular types of use data which denote the occurrence of an error event. In particular, each of these entries denotes the occurrence of an error event of a particular type of one or more types of error event. These entries may be referred to as entries of a third type of use data. Each of these entries may also include a timestamp, as discussed above. As with other events which denote the occurrence of a respective use event, the triggers for the controller 120 to generate and store entries of this use data may comprise the occurrence of a use event, which in this case is the occurrence of a respective error event. As discussed above, the controller 120 may determine the occurrence of these error events by determining that one or more predetermined criteria associated with each error event have been met.

The one or more types of error event comprise one or more malfunction error events which relate to a malfunction, e.g. of a component of the aerosol provision device 100, or more broadly the aerosol provision system 1 which comprises the aerosol provision device 100 and a consumable 150. For instance, the malfunction error event may be an aerosol generator error event relating to a malfunction of an aerosol generator such as aerosol generator 160, which the controller 120 is configured to cause to generate aerosol from aerosol generating material. For example, the aerosol generator error event may relate to a malfunction of a heating assembly of the aerosol generator, such as a malfunction of the heating assembly to heat to a particular temperature. In other words, if the heating assembly is determined not to have heated to a particular temperature, for example following the controller 120 causing the heating assembly to heat according to a particular heating profile, then an aerosol generator error event may be determined to have occurred.

The malfunction error event may be a power source error event relating to a malfunction of the power source 140, such as a malfunction of the charging of the power source 140 or a malfunction of the supply of power from the power source 140 to other components of the aerosol provision device 100. For instance, if the power source fails to charge to a particular power level following a supply of power source to charge the power source having particular properties (e.g. voltage, current) for a particular duration, then it may be determined that a power source error event has occurred. The malfunction error event may also be a control interface error event relating to a malfunction of the control interface 130. For example, if a communication module such as a wired or wireless communication module of communication circuitry of the control interface 130 fails to establish a data connection with a further device or communicate data with a further device, then it may be determined that a communication circuitry error event has occurred.

Likewise, a malfunction error event may be a controller error event relating to a malfunction of the controller 120. For example, if the controller 120 attempts to perform a control action, such as encrypting data, but fails to perform the control action, then a controller error event may be determined to have occurred. Furthermore, a malfunction error event may be a memory error event relating to a malfunction of the memory 110. In some cases, a memory may become corrupted such that it is not operable upon, e.g. to read from or write to, and if the controller 120 attempts to perform a control action involving the memory 110 such as reading from or writing to the memory, then it may be determined that a memory error event has occurred.

The collection of use data may also comprise entries of particular types of use data which denote the occurrence of a particular behavioural event, which is determined to occur when one or more predetermined criteria relating to a pattern of use by a user is met. In some cases, a behavioural event may relate to a user behaviour indicative of unsatisfactory performance of the aerosol provision device 100 (or broader aerosol provision system 1). These events may be helpful in providing insight where the controller 120 may not be able to directly measure something occurring, but may infer that something has occurred from the behaviour of a user. For example, the behavioural event may be a device discard event, for which the one or more predetermined criteria may be that the counts of use of the aerosol provision device 100 to generate aerosol from aerosol generating material within a particular period fall below a threshold value, which would indicate that a user is not receiving satisfactory performance of the aerosol provision device 100 and may have discarded the aerosol provision device 100. Further, the behavioural event may be a consumable discard event, for which the one or more predetermined criteria associated with the behavioural event may be that a consumable comprising aerosol generating material has been removed from the aerosol provision device 100 before a threshold amount of aerosol has been generated from the aerosol generating material. This may indicate that the aerosol generating material has become unstable or decayed in some manner as to make it unpalatable to a user.

The controller 120 may be configured to store entries of different types of use data in different locations in the memory 110. For example, the controller 120 may be configured to generate entries of a first type of use data, and store the entries of a first type of use data in a first location in the memory 110. Further, the controller 120 may be configured to generate entries of a second type of use data, and store the entries of the second type of use data in a second location in the memory 110. The first and second locations may be in different parts of the memory 110 (such as external memory and controller memory), or in the same part of the memory 110. These first type of use data and second type of use data may refer to any of the types of use data discussed above, or any others.

It is also advantageous for entries of this collection of use data to be sent to further devices. This may be achieved by the communication circuitry of the control interface 130, which is configured to send data to further devices, and optionally establish data connections with further devices. In some approaches, the communication circuitry may comprise a wireless communication module configured to establish a wireless data connection with one or more further devices, and communicate data with one or more further devices using a wireless data connection, and this may use any of the wireless communication modules discussed above. In some approaches, the communication circuitry may comprise a wired communication module configured to establish a wired data connection with one or more further devices, and communication data with one or more further devices using the wired data connection, and this may use any of the wired communication modules discussed above.

The further device may be a computing device, such as a local computing device. For example, the local computing device may be a smartphone, personal computer, or connectivity hub. Further, the computing device may be a remote computing device, such as a server. The communication circuitry may send the data directly to the local computing device, or indirectly, relayed by another device or multiple other devices.

The controller may be configured to cause the communication circuitry to send data to a further device by sending one or more packets (i.e. data packets) to the further device, each packet of the one or more packets comprising a payload comprising the data being sent, and control information relating to the sending of the packet. The control information may be in the form of header data and/or footer data. In the case that the one or more packets comprises a plurality of packets, the control information may comprise sequencing information relating to an order of each packet within a sequence of packets sent by the communication circuitry. Furthermore, the control information may comprise an identifier of the further device, such as a unique identifier, such that the further device can determine that it is the intended recipient. Correspondingly, the control information may comprise an identifier of the aerosol provision device 100, such as a unique identifier, such that the further device can determine what the packets were sent by.

The control information of each packet may also comprise error correction code, relating to the payload of each packet. Error correction code refers to a piece of information which may be used to assess whether an associated data is intact or not (e.g. it includes errors), for example following the sending of the associated data. Error correction code may also be used, if it is determined that the associated data is not intact, to attempt to repair the associated data. Error correction code can be generated for particular data by applying an error correction code software function to the data, in order to generate the error correction code as an output.

Various different types of error correction code are applicable to the approaches discussed in this application, which may be suited to different situations. The controller 120 may be configured to generate error correction code for particular data by applying an error correction code software function to the data, in order to generate the error correction code as an output. Firstly, a block code error correction code may be used, which is generated by applying an error correction code software function to blocks of data of definite length. This approach may be particularly well suited when the data for which the error correction code is to be generated has already been generated and is of a size which is known. One example of block error correction code is cyclic redundancy check ("CRC") error correction code, which is particularly well suited to protecting against common types of errors when sending data, and involves lower processing demands than other types of error correction code. Secondly, a convolution code error correction code can be used, which is generated by applying an error correction code software function to streams of data of indefinite length. This approach may, by contrast, be well suited to cases where the data for which the error correction code is to be generated is being generated according to an ongoing process, and the size of the data is not fixed.

At least part of each packet may also be encrypted. The controller 120 may be configured to encrypt data using a first cryptographic key of the aerosol provision device to generate encrypted data. The encrypted data may then be decrypted by an authorised computing system having a second cryptographic key which corresponds to the first cryptographic key. As such, the encrypted data may not be readable to an unintended recipient not having the second cryptographic key which corresponds to the first cryptographic key, and accordingly if any of the packets are intercepted and received by an unintended recipient then the data of the payload, which is encrypted, may not be readable and will remain secure.

The term "cryptographic key" with regard to the present invention referring to a piece of information (usually a string of characters comprising letters and/or numbers), to which a software function can be applied for authentication. Each of the first cryptographic key and the second cryptographic key may be a string of characters (e.g. a code) of as few as three digits, although in most cases more digits are used, such as more than five, or more than ten. The first cryptographic key and the second cryptographic key are cryptographically associated with one another, such that each cryptographic key corresponds to the other, and one cryptographic key may be used to test whether the other has been used to generate information (e.g. the information comprises the other key).

The authorised computing system may comprise a computing device, such as a remote computing device, such as remote computing device 480 (e.g. a server) on the cloud 490. The authorised computing system may, in arrangements, comprise a plurality of computing devices, for example a network of computing devices. The authorised computing system is controlled by the manufacturer of the aerosol provision device 100, or an entity operating with or on behalf of the manufacturer to perform particular functionality relating to data provided to and received from the aerosol provision device 100. The authorised computing system is trusted to receive use data from the aerosol provision device 100, for example so that an authorised person using the authorised computing system can examine use data received by the authorised computing system to provide insight to the functioning of the aerosol provision device 100 and the behaviour of the user. Further, data (e.g. instructions and requests) received by the aerosol provision device 100 from the authorised computing system may be trusted by the aerosol provision device 100.

Once the one or more packets have been sent to a further device, e.g. using the communication circuitry in the approaches set out above, the further device may send an input to the aerosol provision device 100 (e.g. the communication circuitry) indicating receipt of the one or more packets. This may be because the control information of the one or more packets sent to the further device has included a request for a confirmation of receipt of the one or more packets. The controller 120 may be configured to repeat the causing of the communication circuitry to send the one or more packets of data to the further device, if the input indicating receipt of the one or more packets is not received, e.g. within a particular period of time. However, in other approaches, the controller 120 is not configured to repeat the causing of the communication circuitry to send the one or more packets of data to the further device, for example if the control information of the one or more packets did not include a request for a confirmation of receipt.

In some approaches, once entries of use data have been sent to the further device (but not necessarily received by the further device), the same entries of use data in the memory 110 may no longer be considered necessary. However, in other approaches, such as in the case of higher importance entries of use data, the entries of use data may be considered necessary to retain in the memory 110 until an input is received indicating receipt of the entries of use data by the further device. In still further approaches, such as in the case of top importance entries of use data, the entries of use data in the memory may be considered necessary to retain in the memory 110 of the aerosol provision device, regardless of whether or not an input is received indicating receipt of the entries of use data by the further device.

As such, the controller may be configured to, responsive to determining that an entry of a first type of use data has been sent by the communication circuitry to a further device, label the entry in the collection of use data as having been sent, or delete the entry from the collection of use data. Further, the controller may be configured to, responsive to determining that an entry of a second type of use data has been received by the further device, label the entry in the collection of use data as having been received by the further device, or delete the entry from the collection of use data. As discussed above, the controller may be configured to determine that an entry has been received by the further device when the control circuitry receives an input from the further device indicating receipt of the entry.

During use of an aerosol provision device, such as aerosol provision device 100, events may occur, as discussed above. In order to be informed of these events, it can be advantageous for the aerosol provision device 100 to send information about these events to a further device, such as a computing device which a user or authorised person can access in order to gain an understanding of the event. In particular, in the case of error events, this can allow the error events to be diagnosed, and suitable corrective measures determined. However, this approach may also be beneficial in the context of other events, which may inform a user or authorised person how an aerosol provision device is being used.

The sending of information about these events can be improved by sending a data report which is generated in response to the event, and which includes one or more entries of the collection of use data, which may provide valuable context relating to the occurrence of the event. As well as the one or more entries of the collection of use data, the data report may also include information such as an indication that the event has occurred and a timestamp at which the event occurred, as well as an identifier of the aerosol provision device 100 (such as a unique identifier) and in some cases an indication of a type of the aerosol provision device 100. This type of the aerosol provision device 100 may refer to the type of aerosol generating material or consumable that the aerosol provision device is configured to receive, a type of aerosol generator that the aerosol provision device is configured to cause to generate aerosol from aerosol generating material, and a model of the aerosol provision device.

Furthermore, different data reports may be generated in response to the occurrence of different events. This can ensure that, rather than sending all of the collection of use data, the most relevant entries of the collection of use data for the particular event in question can be included in the data report in order to ensure that the data report is not unnecessarily oversized. Furthermore, the value of additional data such as the type of the aerosol provision device may vary depending on the event, and as such different data reports may also include different additional data in this regard.

Accordingly, this dynamic generation of different data reports can be implemented by generating each data report for a different event with a different report scheme, which defines how the data report is to be generated. The controller is configured to determine the occurrence of a predetermined first event, and responsive to determining the occurrence of an event corresponding to the predetermined first event, generate a first data report according to a first report scheme. Likewise, the controller is configured to determine the occurrence of a predetermined second event, and responsive to determining the occurrence of an event corresponding to the predetermined second event, generate a second data report according to a second report scheme, which may be different to the first report scheme. The use of a respective report scheme for the first and second events can therefore enable the respective data reports generated for each of these events to be optimised for each event. As discussed above, the occurrence of an event corresponding to a predetermined first event or predetermined second event can be determined by the controller determining that one or more predetermined criteria associated with the predetermined first event or predetermined second event have been met. Furthermore, each report scheme may be implemented by the by software or logic of the controller 120.

The report scheme, such as the first report scheme or second report scheme, may specify the one or more entries of use data to include in the data report. For example, this may specify one or more types of entries of use data to include in the data report, and specifically which entries of each of the one or more types of entries of use data to include in the data report. Further, this may specify the inclusion of all of each of the one or more types of entries of use data are included in the data report, or that all of the entries from a given period of each of the one or more types of entries of use data are included in the report, in which case the given period may be different for each of the one or more types of entries of use data. In many cases, the report scheme may specify that multiple types of entries are to be included in the data report, for example one or more entries of a first type of use data and one or more entries of a second type of use data.

In particular cases, the predetermined first event and/or the predetermined second event correspond to an error event of a particular type. As discussed above, various types of error event are contemplated, including error events which relate to the malfunction of (any component of) the aerosol provision device 100, and error events which relate to a user behaviour indicative of unsatisfactory performance of the aerosol provision device 100. In the case that a data report is generated responsive to determining the occurrence of an error event, the inclusion of multiple entries of use data, e.g. different types of use data, may be particularly valuable as this can provide an improved illustration of the context of the error event in order to aid diagnosis of the causes of the error.

Further, different predetermined events which correspond to error events may warrant the inclusion of different (amounts of) entries of use data. For example, in the case that the (first or second) predetermined event corresponds to an error event which relates to the malfunction of an aerosol generator, or an error event which relates to the malfunction of the power source 140, then the corresponding (first or second) report scheme may specify that the (first or second) data report includes entries of use data denoting the occurrence of one or more types of error event including, for example, error events relating to a malfunction of an aerosol generator, the power source 140, the control interface 130, the memory 110, and/or the controller 120. In other cases, such as where the (first or second) predetermined event corresponds to an error event which relates to the malfunction of the controller 120, or an error event which relates to the malfunction of the memory 110, then the corresponding (first or second) report scheme may specify that the (first or second) data report includes entries of use data denoting the occurrence of one or more types of error event including error events relating to a malfunction of the memory 110 and/or the controller 120.

Additional insight can also be provided when the report scheme specifies that the data report for an event, such as an error event, includes one or more entries denoting the occurrence of an error event of a particular type of one or more types of error event. These entries of use data may be referred to as a third type of use data, wherein each entry of the third type of use data denotes the occurrence of a (previous) error event. This inclusion of entries of use data which denotes the occurrence of error events can, particularly when the event which the data report is being generated in response to is itself an error event, provide advantageous insight into how the occurrence of previous errors are impacting the functioning of the aerosol provision device 100.

Furthermore, it may be that the occurrence of particular types of error event are of particular importance for understanding the context of events which are the subject of a data report, especially when the event which is the subject of a data report is an error event itself. As such, report schemes for (error) events may specify that (e.g. all of the) entries denoting the occurrence of error events of a particular type are included. For example, report schemes for particular error events may specify that (e.g. all of the) entries denoting the occurrence of error events of that type of error event are included. This could mean that, for an aerosol generator error event, all of the entries denoting the occurrence of (previous) aerosol generator error events are included in the data report generated in response to the aerosol generator error event. This may help ascertain whether a trend of error events of a particular type is occurring. Furthermore, report schemes for particular error events may specify that entries denoting the occurrence of error events of other types of error event are included. As an illustrative example, for an aerosol generator error event, entries denoting the occurrence of (previous) power source error events may be included in the data report. This may help the report to show whether there are potential causal links between different types of error events.

In further examples, the predetermined first event or the predetermined second event may correspond to a receipt by the aerosol provision device 100 (e.g. the control interface 130 of the aerosol provision device 100) of an instruction for the controller 120 to perform a reset of the aerosol provision device 100. This reset may be, for example a factory reset. To perform the reset, the controller 120 may write any data in the memory 110 to an original state, in which all entries of the collection of use data are deleted, and an additional data which has been stored in the memory 110 during use of the aerosol provision device 100. Furthermore, the controller 120 may restore any operating parameters of the aerosol provision device 100 to an original state. Before performing the reset, the controller 120 may determine that the event of the receipt of an instruction to perform a reset of the aerosol provision device 100 has occurred, and generate a data report according to a respective report scheme, and cause the communication circuitry to send this report scheme to a further device. The report scheme in this case may specify that all of the entries of the collection of use data are included in the report scheme.

Once the data report, such as the first data report or the second data report, has been generated, the controller 120 is configured to cause the communication circuitry to send the data report to a further device. This further device may be a further device which the communication circuitry has established a data connection with, and using the data connection the communication circuitry can send the data report to the further device. As discussed above, the further device may be a local computing device, such as a smartphone, which the user may have access to, and using which the user may be able to gain insight to the occurrence of the event. In addition or alternative, the further device may be a remote computing device, such as a server, which is not controlled by a user, and using which an authorised person, such as an employee of the manufacture of the aerosol provision device 100, may gain an understanding of the occurrence of the event.

Each report scheme may specify a priority at which the controller is to generate (e.g. and send) the data report generated using the report scheme. When the controller 120 has determined the occurrence of multiple events for which a data report is to be generated, and when these reports have not yet been (fully) generated, the controller 120 is configured to determine an order in which to generate the multiple data reports, based on the priority of each report scheme of the multiple data reports. For instance, in the case that the controller 120 has determined the occurrence of an event corresponding to a predetermined first event, and an event corresponding to a predetermined second event, and the first data report and second data report have not yet been (fully) generated, the controller 120 may determine an order in which to generate the first data report and the second data report, based on a priority specified by the first report scheme and a priority specified by the second report scheme. This may be particularly helpful in the case that one of the events is an error event which may imply a time urgency of generating and sending the respective data report, such as in the case of a power source malfunction event, which may shortly lead to the power source 140 ceasing to supply power, and so there is a time urgency to send a data report for this power source malfunction event.

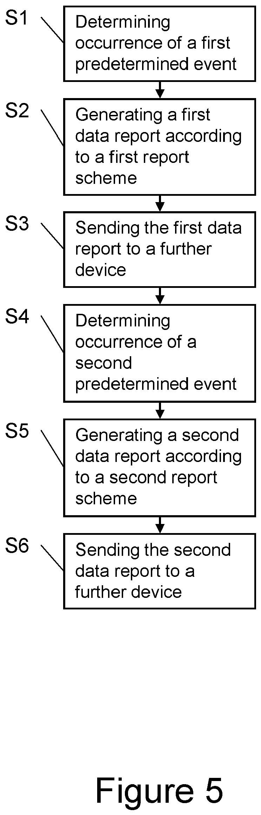

A method for an aerosol provision device, such as aerosol provision device 100, 200, 300, 400, also applicable to aerosol provision systems 1, 2, 3, 4, will now be described with regard to the flow diagram of Figure 5, which shows a flow chart representation of this method, in accordance with certain embodiments.

The method may begin with an initial step of providing an aerosol provision device, such as aerosol provision device 100, 200, 300, 400, or aerosol provision system such as aerosol provision system 1, 2, 3, 4. Also provided is a controller, such as controller 120, 220, 320, which is configured to control operation of the aerosol provision device. The controller may be the controller of the aerosol provision device, or a controller of a further device.

In step S1, the controller determines the occurrence of an event corresponding to a predetermined first event. As discussed above, this may comprise the controller determining whether one or more predetermined criteria associated with the first predetermined event are met, and if this one or more predetermined criteria are met then an event corresponding to the predetermined first event may be determined to have occurred.

In step S2, the controller generates a first data report according to a first report scheme. As discussed above, the first data report may comprise one or more entries of a collection of use data in memory of the aerosol provision device, wherein the first report scheme specifies the one or more entries of use data to include in the first data report. The first report scheme may specify further one or more types of entries of use data to include in the first data report. The first report scheme may also specify a period from which to include one or more entries of use data in the first data report, such as a period for each type of the one or more types of entries of use data.

In step S3, the controller the first data report to be sent to a further device, for example by communication circuitry of the aerosol provision device. As discussed above, this may involve causing the communication circuitry to send one or more packets to the further device, the one or more packets comprising the first data report. The first device may be a (local or remote) computing device, and the first data report may be sent to the further device by a wired communication module or wireless communication module of the communication circuitry.

In step S4, the controller determines the occurrence of an event corresponding to a predetermined second event. As discussed above, this may comprise the controller determining whether one or more predetermined criteria associated with the second predetermined event are met, and if this one or more predetermined criteria are met then an event corresponding to the predetermined second event may be determined to have occurred.

In step S2, the controller generates a second data report according to a second report scheme. As discussed above, the second data report may comprise one or more entries of a collection of use data in memory of the aerosol provision device, wherein the second report scheme specifies the one or more entries of use data to include in the second data report. The second report scheme may specify further one or more types of entries of use data to include in the second data report. The second report scheme may also specify a period from which to include one or more entries of use data in the second data report, such as a period for each type of the one or more types of entries of use data.

In step S3, the controller the second data report to be sent to a further device, for example by communication circuitry of the aerosol provision device. As discussed above, this may involve causing the communication circuitry to send one or more packets to the further device, the one or more packets comprising the second data report. The second device may be a (local or remote) computing device, and the second data report may be sent to the further device by a wired communication module or wireless communication module of the communication circuitry.

While it is noted that the above discussion is presented in the context of the controller 120 of the aerosol provision device 100 controlling operation of the aerosol provision device 120, and performing the method steps set out above, other approaches are contemplated. In particular, the operation of the aerosol provision device 100 may be controlled by a set of one or more controllers, which may each perform any of the steps discussed above.

For example, the set of one or more controllers may comprise the controller 120 of the aerosol provision device 100, and may additionally or alternatively comprise a controller of a further device which is configured to communicate data with (e.g. the communication circuitry of the control interface 130 of) the aerosol provision device 100. The further device may be a local computing device, such as a smartphone, which is configured to communicate data with the aerosol provision device 100 using a wired data connection (e.g. a USB connection) or wireless data connection (e.g. a Bluetooth connection). The controller of the further device may be configured to determine the occurrence of an event corresponding to a predetermined (first and/or second) event, and in addition or alternative may be configured to generate a corresponding (first and/or second) data report responsive to determining the occurrence of the event. Conversely, the controller 120 may be configured to perform some (or all) of these steps. Further, the controller 120 of the aerosol provision device 100 or the controller of the further device may be configured to cause communication circuitry of the system (e.g. of the aerosol provision device 100 or the further device) to send the (first and/or second) data report to another further device (e.g. of the authorised computing system, as discussed above).

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. An aerosol provision device comprising:
a controller configured to control operation of the aerosol provision device;
a control interface, the control interface comprising communication circuitry configured to send data to one or more further devices; and
a memory for storing a collection of use data comprising a plurality of entries, the plurality of entries comprising entries of a first type of use data and entries of a second type of use data,
wherein the controller is configured to:
determine the occurrence of an event corresponding to a predetermined first event;
responsive to determining the occurrence of an event corresponding to the predetermined first event, generate a first data report comprising one or more entries of the collection of use data, wherein the first data report is generated according to a first report scheme;
cause the communication circuitry to send the first data report to a further device;
determine the occurrence of an event corresponding to a predetermined second event; and
responsive to determining the occurrence of an event corresponding to the predetermined second event, generate a second data report comprising one or more entries of the collection of use data, wherein the second data report is generated according to a second report scheme; and
cause the communication circuitry to send the second data report to a further device.

2. The aerosol provision device of claim 1, wherein:
i) the first report scheme specifies the one or more entries of use data to include in the first data report; and
ii) the second report scheme specifies the one or more entries of use data to include in the second data report.

3. The aerosol provision device of claim 1 or 2, wherein:
i) the first report scheme specifies one or more types of entries of use data to include in the first data report; and
ii) the second report scheme specifies one or more types of entries of use data to include in the second data report.

4. The aerosol provision device of claim 3, wherein:
i) the first report scheme specifies which entries of each of the one or more types to include in the first data report; and
ii) the second report scheme specifies which entries of each of the one or more types to include in the second data report.

5. The aerosol provision device of any of claims 2 to 4, wherein:
i) the first report scheme specifies that the one or more entries of use data to include in the first data report include entries of a plurality of types of use data; and
ii) the second report scheme specifies that the one or more entries of use data to include in the second data report include entries of a plurality of types of use data.

6. The aerosol provision device of any of claims 1 to 5, wherein:
the first data report comprises: i) an indication that the first predetermined event occurred; and/or ii) a timestamp at which the first predetermined event occurred; and/or
the second data report comprises: i) an indication that the second predetermined event occurred; and/or ii) a timestamp at which the second predetermined event occurred.

7. The aerosol provision device of any of claims 1 to 8, wherein the collection of use data comprises entries of a third type of use data, wherein each entry of the third type of use data denotes the occurrence of an error event of a particular type of one or more types of error event.

8. The aerosol provision device of any of claims 1 to 7, wherein the controller is configured to:
i) determine the occurrence of an event corresponding to the first predetermined event by determining that one or more predetermined criteria associated with the first predetermined event are met; and
ii) determine the occurrence of an event corresponding to the second predetermined event by determining that one or more predetermined criteria associated with the second predetermined event are met.

9. The aerosol provision device of any of claims 1 to 8, wherein the predetermined first event and/or predetermined second event corresponds to an error event of a particular type of one or more types of error event.

10. The aerosol provision device of claim 9, wherein the one or more types of error event comprise one or more malfunction error events relating to a malfunction.

11. The aerosol provision device of any of claims 1 to 10, wherein the one or more predetermined events comprise one or more behavioural events relating to a pattern of use by a user, which behavioural events are determined to occur when one or more predetermined criteria relating to a pattern of use by a user is met.

12. The aerosol provision device of any of claims 1 to 11, wherein the entries of the first type of use data and/or the second type of use data denote an occurrence of a use event or a property relating to the aerosol provision device.

13. The aerosol provision device of any of claims 1 to 12, wherein
the controller is configured to generate entries of the first type of use data, and store the generated entries of the first type of use data in the memory, responsive to the occurrence of triggers comprising: i) the passing of predetermined times; and/or ii) use events which are denoted by the entries of the first type of use data; and/or
the controller is configured to generate entries of the second type of use data, and store the generated entries of the second type of use data in the memory, responsive to the occurrence of triggers comprising: i) the passing of predetermined times; and/or ii) use events which are denoted by the entries of the second type of use data.

14. A method for an aerosol provision device, comprising:
providing an aerosol provision device and a controller configured to control operation of the aerosol provision device;
determining, by the controller, the occurrence of an event corresponding to a predetermined first event;
responsive to determining the occurrence of an event corresponding to the predetermined first event, generating, by the controller, a first data report comprising one or more entries of a collection of use data in memory of the aerosol provision device, wherein the first data report is generated according to a first report scheme;
causing, by the controller, communication circuitry to send the first data report to a further device;
determining, by the controller, the occurrence of an event corresponding to a predetermined second event; and
responsive to determining the occurrence of an event corresponding to the predetermined second event, generating, by the controller, a second data report comprising one or more entries of the collection of use data, wherein the second data report is generated according to a second report scheme; and
causing the communication circuitry to send the second data report to a further device.

15. A system, the system comprising an aerosol provision device,
wherein the system comprises a set of one or more controllers configured to control operation of an aerosol provision device, wherein the set of one or more controllers is configured to:
determine the occurrence of an event corresponding to a predetermined first event;
responsive to determining the occurrence of an event corresponding to the predetermined first event, generate a first data report comprising one or more entries of a collection of use data comprising a plurality of entries of use data in memory of the aerosol provision device, wherein the first data report is generated according to a first report scheme;
cause communication circuitry of the system, which is configured to send data to one or more further devices, to send the first data report to a further device;
determine the occurrence of an event corresponding to a predetermined second event; and
responsive to determining the occurrence of an event corresponding to the predetermined second event, generate a second data report comprising one or more entries of the collection of use data, wherein the second data report is generated according to a second report scheme; and
cause the communication circuitry to send the second data report to a further device.
